(19) Europäisches Patentamt
European Patent Office
Office européen des brevets

(11) EP 1 299 458 B1

(12) **FASCICULE DE BREVET EUROPEEN**

(45) Date de publication et mention de la délivrance du brevet:
**30.11.2011 Bulletin 2011/48**

(21) Numéro de dépôt: **01949602.5**

(22) Date de dépôt: **29.06.2001**

(51) Int Cl.:
***C08J 3/03*** *(2006.01)* ***C08J 3/215*** *(2006.01)*
***C08J 3/22*** *(2006.01)*

(86) Numéro de dépôt international:
**PCT/FR2001/002105**

(87) Numéro de publication internationale:
**WO 2002/000770 (03.01.2002 Gazette 2002/01)**

(54) **DISPERSION AQUEUSE A BASE D'HUILES SILICONES VISQUEUSES RETICULABLES PAR CONDENSATION EN UN ELASTOMERE ADHERENT UTILISABLES NOTAMMENT COMME MASTICS OU PEINTURES, PROCEDE DE PREPARATION**

WÄSSRIGE DISPERSIONEN VON VISKOSE, DURCH KONDENSATION HAFTENDE ELASTOMERE, VERNETZBARE SILIKONÖLE WELCHE FÜR DICHTUNGSMASSEN UND LACKE GEEIGNET SIND UND DEREN HERSTELLUNG

AQUEOUS DISPERSION COMPRISING VISCOUS SILICONE OILS CROSSLINKABLE BY CONDENSATION INTO AN ADHERING ELASTOMER FOR USE AS SEALANTS OR PAINTS AND PREPARATION METHOD

(84) Etats contractants désignés:
**AT BE CH CY DE DK ES FI FR GB GR IE IT LI LU MC NL PT SE TR**

(30) Priorité: **30.06.2000 FR 0008551**

(43) Date de publication de la demande:
**09.04.2003 Bulletin 2003/15**

(73) Titulaire: **Henkel AG & Co. KGaA**
**40589 Düsseldorf (DE)**

(72) Inventeurs:
- **BOUVY, Bernard**
  **F-69160 Tassin la Demi Lune (FR)**
- **DERUELLE, Martial**
  **Chemin de la Civaude**
  **F-69440 Mornant (FR)**
- **FEDER, Michel**
  **F-69100 Villeurbanne (FR)**

(56) Documents cités:
**EP-A- 0 166 397** **EP-A- 0 354 015**
**EP-A- 0 606 671** **WO-A-94/09059**
**FR-A- 2 753 708** **US-A- 4 221 688**

Remarques:
Le dossier contient des informations techniques présentées postérieurement au dépôt de la demande et ne figurant pas dans le présent fascicule.

Il est rappelé que: Dans un délai de neuf mois à compter de la publication de la mention de la délivrance du brevet européen au Bulletin européen des brevets, toute personne peut faire opposition à ce brevet auprès de l'Office européen des brevets, conformément au règlement d'exécution. L'opposition n'est réputée formée qu'après le paiement de la taxe d'opposition. (Art. 99(1) Convention sur le brevet européen).

EP 1 299 458 B1

Printed by Jouve, 75001 PARIS (FR)

## Description

La présente invention concerne une nouvelle dispersion aqueuse à base d'huiles silicone visqueuses pouvant réticuler en un élastomère par élimination d'eau (condensation). Cet élastomère réticulé peut être utilisé pour la réalisation de mastics ou tout autre matériau d'étanchéification, ou bien encore de revêtements enduits élastomériques ignifuges ou hydrofuges, éventuellement pulvérisables, e.g. : peintures, revêtements semi-épais souples.

La présente invention vise également la préparation de cette dispersion silicone aqueuse.

Classiquement, les dispersions aqueuses d'huiles silicone comprennent :

- A - au moins une huile polyorganosiloxane susceptible de réticuler par condensation et élimination d'eau, en un élastomère ;
- B - éventuellement au moins un agent de réticulation ;
- C - éventuellement au moins un promoteur d'adhérence constitué de préférence par au moins un silane ;
- D - une charge organique et/ou minérale siliceuse et/ou non siliceuse ;
- E - éventuellement un catalyseur du durcissement (catalyseur de condensation à l'étain)
- F - au moins un émulsifiant (tensioactif ionique ou non) ;
- G - un ou plusieurs autres additifs fonctionnels ;
- H- et de l'eau.

Ces dispersions silicone aqueuses réticulables en un élastomère par condensation avec élimination d'eau et ou d'alcool sont faciles à utiliser, notamment dans le bâtiment en raison de leur caractère lavable à l'eau.

Néanmoins, ces produits ont soulevé un certain nombre de difficultés techniques :

stabilité au stockage (taux de coalescence),
temps de durcissement trop long,
propriétés mécaniques médiocres de l'élastomère (dureté, élasticité, résistance à l'abrasion),
défaut de thixotropie de l'élastomère,
défaut de caractère "peignable" de l'élastomère,
problème de sécurité et de toxicité dû aux solvants et alcools formés par hydrolyse,
faibles propriétés d'adhérence et cohésion de l'élastomère sur les supports usuels,
stabilité de l'émulsion lors de la formulation et pendant le stockage (taux de coalescence),
facilité de mise en émulsion et de formulation de la dispersion,
possibilité de préparation en continu selon des contraintes industrielles.

Parmi toutes ces spécifications du cahier des charges, il est en une qui est particulièrement importante pour l'appréciation de la qualité d'une dispersion silicone aqueuse. Il s'agit de l'adhérence de l'élastomère formé à partir de la dispersion silicone aqueuse après évaporation de l'eau, voire de l'alcool de condensation. L'adhérence recherchée pour l'élastomère doit s'entendre aussi bien en termes de force d'adhésion sur un support donné aussi bien qu'en termes d'adhérence sur un large éventail de supports différents (verre, bois, métal, béton, PVC, polyuréthane). La recherche de l'adhérence est d'autant plus délicate qu'elle se fait en général au détriment de la stabilité colloïdale de la dispersion.

On connaît ainsi des dispersions silicone aqueuses perfectibles notamment en ce qui concerne l'amélioration de l'adhérence.

Le brevet américain U.S. 4,221,688 divulgue une dispersion silicone aqueuse apte à former un élastomère par condensation / séchage. Cette dispersion est obtenue par polymérisation en émulsion qui requiert la mise en oeuvre de tensioactif anionique pour la stabilisation. Parmi les charges incorporées dans cette dispersion silicone aqueuse, figure une dispersion aqueuse de silice colloïdale.

La présence obligatoire d'un tensioactif ionique, le plus souvent anionique, nuit à la stabilité de la dispersion silicone aqueuse (mastic) . Elle diminue ses performances, par exemple en ce qui concerne l'adhérence et les propriétés mécaniques. Les dispersions aqueuses obtenues par le procédé selon le brevet sont peu concentrées, peu stables, en particulier au cycle de gel / dégel.

La faible adhérence des élastomères obtenus à partir de ces dispersions silicone aqueuses polymérisées en émulsion est liée à la forte concentration en tensioactifs. Ce mode d'obtention par polymérisation en émulsion est à distinguer de la préparation de dispersions silicone aqueuses selon un protocole opératoire faisant intervenir une mise en émulsion d'un silicone déjà polymérisé, une éventuelle dilution de l'émulsion et une formulation de la dispersion ("compoundage").

Il n'est pas question, et pour cause, dans ce brevet américain de mise en oeuvre de silice colloïdale lors de l'émulsification.

Il convient d'ajouter par ailleurs que cette technique est contraignante et peu compétitive.

Dans la demande de brevet européen EP 0 354 015, on décrit également la préparation et l'utilisation d'une émulsion à base de diorganosiloxanes, stabilisée avec un agent tensioactif anionique. Pour préparer des films renforcés, à base de polydiorganosiloxanes pour l'enduction de surfaces, on ajoute essentiellement une dispersion d'acide silicique pyrogéné. La dispersion obtenue constituée par le polyorganosiloxane, l'acide silicique pyrogéné et en en plus du vinyltriméthoxysilane est soumise à une polymérisation en émulsion avec un catalyseur à base d'étain. De cette manière, on obtient des enductions de surfaces qui présentent une résistance physique supérieure.

Les demandes de brevets européens EP 0 665 861 et EP 0 665 862 décrivent la préparation d'un mastic en silicone en dispersion aqueuse, par émulsification d'une huile silicone réactive visqueuse contenant éventuellement un réticulant (par exemple une résine silicone hydroxylée), un catalyseur et une charge incorporée sous forme pulvérulente (par exemple carbonate de calcium précipité et enrobé), ainsi qu'un tensioactif non ionique (nonylphénolpolyéthoxylé), éventuellement des promoteurs d'adhésion du type silane alcoxylé (vinyltriméthoxysilane, N-méthy1-3-aminopropyltriméthoxysilane, N-aminoéthyl 3-aminopropyltriméthoxysilane, 3-aminopropyltriéthoxysilane) et naturellement de l'eau introduite au cours de l'émulsification en phase visqueuse.

Les dispersions silicone aqueuses, selon ces brevets, sont précisément préparées selon un principe d'émulsification en phase concentrée, avec des mélanges d'eau et de tensioactifs structurés présentant de fortes viscosités.

Ces dispersions aqueuses, à base d'huiles de silicone visqueuses am-fonctionnelles, sont stables au stockage (fine granulométrie et absence de tensioactifs anioniques) et sont susceptibles de réticuler par élimination d'eau, voire d'alcool, en élastomère dont les propriétés mécaniques sont correctes. Ces dispersions contiennent un polymère silicone dispersé de degré de polymérisation mieux maîtrisé par rapport à celui d'un polymère obtenu par polymérisation en émulsion.

Bien que présentant globalement des propriétés tout à fait honorables, les dispersions silicone aqueuses décrites dans ces brevets ne demandaient qu'à être améliorées au regard du compromis *adhérence / stabilité colloïdale lors de la préparation et au stockage.*

L'un des objectifs essentiels de la présente invention est d'optimiser significativement le compromis *adhérence/ stabilité* sus-évoqué.

Un autre objectif essentiel de l'invention est de proposer une dispersion silicone aqueuse réticulable en élastomère par élimination d'eau, qui remédie aux inconvénients des produits analogues selon l'art antérieur.

Un autre objectif essentiel de l'invention est de fournir une dispersion silicone aqueuse présentant des concentrations réduites en tensioactifs, sans que la stabilité colloïdale de la dispersion en soit affectée.

Un autre objectif essentiel de la présente invention est de proposer une dispersion silicone susceptible d'être obtenue aisément par mise en émulsion, dilution éventuelle et formulation ("compoundage").

Un autre objectif essentiel de l'invention est de fournir une dispersion silicone aqueuse très concentrée.

Un autre objectif essentiel de l'invention est de fournir une dispersion silicone aqueuse susceptible d'être obtenue tout aussi aisément en mode discontinu, qu'en mode continu avec des contraintes industrielles.

Un autre objectif essentiel de l'invention est de fournir un procédé simple et économique de préparation d'une dispersion silicone aqueuse du type de celle sus-mentionnée.

Un autre objectif essentiel de l'invention est de proposer un procédé de préparation de la dispersion sus-mentionnée, lequel procédé se devant-d'être applicable en mode discontinu et continu avec des contraintes Industrielles et en garantissant une fiabilité à toute épreuve.

Un autre objectif essentiel de l'invention est de fournir une dispersion silicone aqueuse dont l'adhérence et la stabilité sont significativement améliorées par rapport à l'existant et qui respecte par ailleurs le cahier des charges mentionné supra.

Un autre objectif essentiel de invention est de fournir une dispersion silicone aqueuse susceptible de servir pour la confection de mastics concentrés, de produits d'enduction élastomérique ou de revêtements protecteurs hydrofuges ou ignifuges, éventuellement pulvérisables ("roofing").

Ces objectifs parmi d'autres, sont atteints par la présente invention qui concerne tout d'abord une dispersion aqueuse d'huile(s) silicone comprenant :

-A- 100 parties en poids d'au moins une huile polyorganosiloxane (A) susceptible de réticuler par condensation, si nécessaire en présence d'un agent de réticulation (B), en un élastomère;

-B- si necessaire de 0,1 à 100 parties en poids d'au moins un agent de réticulation (B);

-C- éventuellement, jusqu'à 50 parties en poids d'au moins un promoteur d'adhésion (C) -de préférence un silane-;

-D- jusqu'à 200 parties en poids sec d'une charge (D), sélectionnée dans le groupe de composés hydrophiles comprenant la silice colloïdale, la silice de précipitation, la silice de pyrogénation, $CaCO_3$, $TiO_2$, $Al_2O_3/H_2O$, (co) polymère(s) organique(s) en émulsion et leurs mélanges;

-E- une quantité catalytiquement efficace d'un composé catalytique de durcissement (E) pouvant allerjusqu'à 3 parties en poids;

-F- au moins un émulsifiant (F);

-G- éventuellement au moins un additif fonctionnel (G) ;
-H- et de l'eau;
ladite dispersion étant obtenue :

par réalisation d'une émulsion par malaxage d'un mélange constitué de :

- 100 parties en poids d'une phase silicone (φs) de viscosité dynamique à 25 °C au moins égale à 10 Pa.s, de préférence à 50 Pa.s et, plus préférentiellement encore à 70 Pa.s, φs comprenant l'huile ou un mélange d'huiles (A) déjà polymérisée(s) et éventuellement au moins un des constituants (B), (C) ou (E) ;
- 0,5-20 parties en poids d'au moins un agent émulsifiant (F), la HLB dudit agent émulsifiant ou du mélange d'agents émulsifiants étant d'au moins 10 :
- 0-100 parties en poids O étant exclu, de charge (D) ;
- 2-20 parties en poids d'eau ;
  le rapport pondéral eau / eau+agent(s) tensioactif(s) étant tel que la viscosité du mélange eau + agent(s) tensioactif(s) soit voisine de ou supérieure à la moitié de celle de la phase silicone (φs) ;
  pendant une durée et dans des conditions de cisaillement suffisantes pour obtenir une émulsion "huile dans eau" de granulométrie de l'ordre de 0,1 à 5 micromètres ;

• par dilution éventuelle avec de l'eau jusqu'à obtenir un extrait sec de 25 à 97%;
• puis par addition

- du ou des constituant(s) non présent(s) dans la phase silicone (φs)
- et/ou de 0-100 parties en poids de charge (D) ;

caractérisée
en ce que entre 2 de 100 % en poids sec de la quantité totale de la charge (D) est apportée, dans le processus d'obtention de la dispersion, sous forme de suspension(s) aqueuse(s) d'au moins un composé hydrophile, dans l'enceinte de malaxage avant l'obtention de l'émulsion et avec les conditions selon lesquelles:

- dans le cas où la charge (D) apportée dans le processus d'obtention de la dispersion, est au moins en partie constituée par au moins une suspension aqueuse de silice colloïdale, alors cette (ou ces) suspension(s) aqueuse(s) de charge (D) est (sont) introduite(s) dans l'enceinte de malaxage avant l'obtention de l'émulsion; et

en ce que l'émulsifiant (F) est sélectionné parmi les tensioactifs non-ionique.

Cette caractéristique d'obtention, à savoir l'utilisation d'une charge hydrophile prédispersée dans l'eau permet, de manière tout à fait surprenante et inattendue, de baisser la dose de tensioactifs dans la dispersion silicone et d'améliorer l'adhérence de l'élastomère susceptible d'être obtenu à partir de cette dernière, sans dégrader la stabilité colloïdale de la dispersion.

La stabilité colloïdale de la dispersion est évaluée grâce au taux d'émulsion résiduel T (%) mesuré selon un protocole opératoire P défini ci-après dans l'exemple 1.

De plus, l'utilisation d'une charge hydrophile prédispersée dans l'eau permet de limiter la coalescence sous cisaillement de l'émulsion concentrée dans la première étape de préparation de la dispersion selon l'invention.

La dispersion selon l'invention a également pour avantage d'être préparée selon un mode opératoire, qui ne pose pas de difficulté particulière en pratique, notamment en ce qui concerne la mise en émulsion.

En outre, la dispersion silicone aqueuse selon l'invention peut être très concentrée.

Le fait d'utiliser une charge en dispersion aqueuse plutôt qu'en poudre améliore significativement la "processabilité" des dispersions aqueuses selon l'invention, de sorte que leur obtention en continu est parfaitement maîtrisée.

La présente invention est assimilable à une sélection d'une charge hydrophile que l'on utilise en suspension aqueuse lors de la préparation de la dispersion.

Il est du mérite des inventeurs d'avoir procédé à cette sélection qui induit, contre toute attente, des caractéristiques particulièrement performantes en termes d'adhérence et de stabilité colloïdale,

Suivant une caractéristique préférée de l'invention, la charge (D) est constituée par des particules de composé(s) hydrophile(s) de surface spécifique Ss relativement élevée, à savoir :

$$Ss > 3$$

de préférence $Ss > 5$.

Conformément à l'invention, la dispersion aqueuse est également caractérisée par une exceptionnelle stabilité colloïdale reflétée par un taux d'émulsion résiduel T (%) mesuré selon un protocole P tel que :

| | |
|---|---|
| | **T**≥70 |
| de préférence | **T**≥80 |
| et plus préférentiellement encore | **T**≥85 |

Il n'était nullement prévisible que l'emploi, sous forme de suspension aqueuse colloïdale, d'une charge faite d'au moins un composé hydrophile, conduirait à de telles valeurs pour **T**.

La dispersion tire sa spécificité du fait que cette (ou ces) suspension(s) aqueuse(s) de charge (D) est (sont) introduite(s) en totalité ou en partie dans l'enceinte de malaxage avant l'obtention de l'émulsion ; la fraction de suspension (s) de charge (D) introduite avant l'obtention de l'émulsion, étant comprise entre 2 et 100 % -de préférence entre 3 et 100 %- en poids sec de la quantité totale de charge (D) prise à l'état sec.

Par exemple, dans le cas où la charge (D) est du $CaCO_3$ et lorsque une fraction seulement de la suspension colloïdale aqueuse de charge (D) est introduite dans l'enceinte de préparation de la dispersion, avant l'obtention de l'émulsion, cette fraction de charge (D) représente avantageusement entre 2 et 40 %, de préférence entre 3 et 30 % poids sec de la quantité totale de charge (D) prise à l'état sec.

On aura compris que les caractéristiques d'obtention de la dispersion varient selon la nature de la charge (D) hydrophile.

Une autre caractéristique avantageuse de la dispersion selon l'invention tient à ce que la totalité de l'eau nécessaire à la réalisation de l'émulsion provient de la (ou des) suspension(s) aqueuse(s) apportant la charge (D).

Avantageusement, la concentration en charge (D) hydrophile dans la suspension aqueuse colloïdale est comprise entre 1 et 90 % en poids sur sec, de préférence entre 20 et 90 % en poids sur sec, et plus préférentiellement encore entre 50 et 90 % en poids sur sec.

En fait, l'extrait sec de cette suspension colloïdale dépend aussi de la quantité d'eau que l'on souhaite amener à la dispersion par l'intermédiaire de la charge colloïdale.

En pratique et globalement, la granulométrie des composés hydrophiles constituant la charge (d) est comprise entre 0,0001 et 300 $\mu$m. Cette granulométrie est bien entendu fonction de la nature des composés hydrophiles.

Suivant une disposition préférée de l'invention, la charge (D) est sélectionnée dans le groupe de composés hydrophiles comprenant : $CaCO_3$, $SiO_2$, $TiO_2$, $Al_2O_3/H_2O$, (co)polymère(s) organique(s) en émulsion et leurs mélanges.

Ces composés hydrophiles susceptibles de constituer la charge (D) solide particulaire, peuvent être obtenus par précipitation dans un liquide et/ou par broyage.

Dans le cas où il s'agit de charge (D) particulaire obtenue par précipitation, il est possible que cette dernière intervienne dans l'eau. On dispose alors directement d'une suspension colloïdale aqueuse de charge (D), utilisable pour la préparation de la dispersion selon l'invention.

Selon une variante, cette suspension peut être obtenue par incorporation de la charge (D) sèche pulvérulente dans l'eau.

C'est ainsi qu'existent, par exemple, des "slurries" de $CaCO_3$ précipité ou du $CaCO_3$ broyé.

Concernant la silice $SiO_2$, il peut s'agir de silice colloïdale, de silice de précipitation ou de silice de pyrogénation.

Le terme "silice colloïdale" désigne une suspension stable de particules de silice différenciées, sensiblement sphériques et de taille comprise entre 0,00001 à 0,1 $\mu$m, de préférence entre 0,001 et 0,05 $\mu$m.

Les copolymères organiques en émulsion sont plus communément connus sous les dénominations "LATEX" ou "NANOLATEX". Il s'agit par exemple de dispersions aqueuses de particules de polymères issus de procédés classiques de co(polymérisation en émulsion d'un ou plusieurs monomères organiques polymérisables. Ces monomères organiques sont de préférence choisis parmi :

- a) : les (méth)acrylate d'alkyle dont la partie alkyle comporte de préférence de 1 à 18 atomes de carbone, en particulier l'acrylate de méthyle, l'acrylate d'éthyle, l'acrylate de propyle, l'acrylate de n-butyle, l'acrylate d'isobutyle, l'acrylate d'amyle, l'acrylate de lauryle, l'acrylate d'isoamyle, l'acrylate de (2 éthyle-2 hexyle), l'acrylate d'octyle, le méthacrylate de méthyle, le méthacrylate de chloroéthyle, le méthacrylate de butyle, le méthacrylate de (diméthyl-3,3 butyle), le méthacrylate d'éthyle, le méthacrylate d'isobutyle, le méthacrylate d'isopropyle, le méthacrylate de phényle, le chloroacrylate de butyle, le chloroacrylate de méthyle, le chloroacrylate d'éthyle, le chloroacrylate d'isopropyle, le chloroacrylate de cyclohexyle ;
- b) : les esters $\alpha,\beta$-éthyléniquement insaturés d'acides monocarboxyliques dont la partie acide est non polymérisable et dont la partie insaturée comporte, de préférence, de 2 à 14 atomes de carbone et la partie acide de 2 à 12 atomes de carbone, en particulier l'acétate de vinyle, le propionate de vinyle, le butyrate de vinyle, l'acétate d'alkyle, le versatate® de vinyle (marque déposée pour des esters d'acides $\alpha$-ramifiés en $C_9$-$C_{11}$), le laurate de vinyle, le

benzoate de vinyle, le triméthylacétate de vinyle, le pivilate de vinyle et le trichloroacétate de vinyle ;
- c) : les esters et les hemi-esters d'acides polycarboxyliques α,β-éthyténiquement insaturés ayant de 4 à 24 atomes de carbone, en particulier le diméthyle, le maléate de diéthyle, le fumarate de méthyle et d'éthyle, le fumarate d' (éthyl-2-hexyle) ;
- d) : les halogènes vinyliques en particulier le chlorure de vinyle, le fluorure de vinyle, le chlorure de vinylidène, le fluorure de vinylidène ;
- e) : les vinyl-aromatiques présentant de préférence au plus 24 atomes de carbone et choisis en particulier parmi le styrène, l'α-méthylstyrène, le 4-méthylstyrène, le 2-méthylstyrène, le 3-méthylstyrène, le 4-méthoxystyrène, le 2-hydroxyméthylstyrène, le 4-éthylstyrène, le 4-éthoxystyrène, le 3,4-diméthylstyrène, le 2-chlorostyrène, le 3-chlorostyrène, le 4-chloro-3-méthylstyrène, le 4-tert-butylstyrène, le 4-dichlorostyrène, le 2,6-dichlorostyrène, le 2,5-difluorostyrène, et le 1-vinylnaphtalène ;
- f) : les diènes aliphatiques conjugués présentant de préférence de 3 à 12 atomes de carbone, en particulier le 1,3-butadiène, l'isoprène et le 2-chloro-1,3-butadiène ;
- g) : les nitriles α,β-éthyténiquement insaturés ayant de préférence de 3 à 6 atomes de carbone tels que l'acrylonitrile et le méthacrylonitrile.

Il est aussi possible de copolymériser au moins un des monomères principaux a) à g) avec jusqu'à 40 % en poids d'au moins un autre monomère à caractère ionique, en particulier :

- un monomère acide carboxylique α,β-éthyléniquement insaturé mentionné ci-dessus incluant les acides mono et polycarboxyliques (acide acrylique, méthacrylique, maléique, itaconique, fumarique, ...),
- un monomère éthylénique comportant des groupes amines secondaires, tertiaires ou quatemisées (vinyl-pyridines, diéthyl-aminoéthylméthacrylate, ....),
- un monomère éthylénique sulfoné (vinylsulfonate, styrène-sulfonate,...),
- un monomère éthylénique zwitterionique (acrylate de sulfopropyl-(diméthylaminopropyle) ou à caractère non-ionique en particulier,
- les amides d'acides carboxyliques insaturés (l'acrylamide, le méthacrylamide, ...),
- les esters de (méth)acrylates et d'alcools polyhydroxypropyles ou polyhydroxyéthylés,
- les silanes vinyliques et/ou acryliques (tel que le vinyltriméthoxysilane et le vinyltriéthoxysilane).

Selon une variante, les dispersions selon l'invention peuvent comprendre en plus de la charge (D) hydrophile apportée sous forme de suspension colloïdale aqueuse, une charge (D') qui est impliquée dans le processus d'obtention de la dispersion, sous forme pulvérulente. Cette charge (D') amenée en poudre dans le mélange conduisant à la dispersion se distingue de la charge (D) hydrophile sèche, au travers de sa surface spécifique Ss ($m^2/g$) qui est réduite, à savoir :

$$Ss \leq 5$$

de préférence $Ss \leq 3$

Comme exemples de charges (D') pulvérulentes, on peut citer : $CaCO_3$, $SiO_2$, $TiO_2$, $Al_2O_3H_2O$.
Avantageusement, la charge (D') peut représenter 5 à 100 parties en poids sec pour 100 parties en poids de phase silicone φs.
Concernant la phase silicone (φs), et en particulier leur(s) constituant(s) essentiel(s) : l'(ou les) huile(s) (A), il est important de noter que, conformément à l'invention, on a procédé à une sélection d'huiles (A) de viscosité et de nature spécifiques.
La viscosité dynamique de l'huile (A) et donc de la phase silicone φs est supérieure ou égale à la 10 Pa.s, de préférence à 50 Pa.s et plus préférentiellement à 70 Pa.s. Cette viscosité est un paramètre important de l'invention. La détermination de ce paramètre peut être faite, par exemple, à l'aide d'un viscosimètre Brookfield selon la norme AFNOR NFT 76 102 02 février 1972.
Avantageusement, les huiles (A) sont des huiles α,ω-hydroxylées ou des huiles fonctionnelles comportant par molécule au moins 2 groupes fonctionnels condensables éventuellement après hydrolyse.
Plus précisément encore, ces huiles (A) peuvent être représentées par la formule générique (I) suivante :

(I)

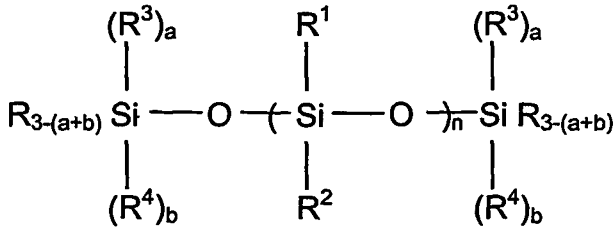

formule dans laquelle :

- $a$ est 0 ou 1
- $b$ est 0 ou 1
- avec $a+b$ = 0 ; 1 ou 2
- $n$ a une valeur suffisante pour conférer au polymère de formule (a) la viscosité désirée
- les radicaux R sont identiques ou différents et représentent
  - ■ un groupe OH avec $a+b$ = 2 ;
  - ■ un groupe alcoxy ou alcényloxy contenant de 1 à 10 atomes de carbone ;
  - ■ un groupe aryloxy contenant de 6 à 13 atomes de carbone ;
  - ■ un groupe acyloxy contenant de 1 à 13 atomes de carbone ;
  - ■ un groupe cétiminoxy contenant de 1 à 8 atomes de carbone ;
  - ■ un groupe amino- ou amido-fonctionnel contenant de 1 à 6 atomes de carbone, liés au silicium par une liaison Si-N ;
- les radicaux $R^1$ et $R^2$ sont identiques ou différents et représentent des groupes organiques aliphatiques alkyle, alcényle, ayant de 1 à 10 atomes de carbone, aromatiques phényle, lesdits groupes étant éventuellement substitués par des atomes d'halogènes ou des groupes cyano ;
- les radicaux $R^3$ et $R^4$ sont identiques ou différents et représentent des groupes organiques aliphatiques alkyle, aminoalkyle, polyaminoalkyle, époxyalkyle, alcényle, contenant de 1 à 13 atomes de carbone, aromatiques aryle contenant de 6 à 13 atomes de carbone ;
  au moins 2 groupes fonctionnels condensables éventuellement après hydrolyse étant présents par molécule d'au moins 80 % des radicaux $R^1$ à $R^4$ représentant un groupe méthyle.

A titre d'exemple de radicaux R, on peut citer les groupes :

- ■ . alkoxy tels que par exemple méthoxy, éthoxy, octyloxy ;
- ■ . alcényloxy tels que par exemple vinyloxy, héxényloxy, isopropényloxy ;
- ■ . aryloxy tels que par exemple phényloxy ;
- ■ . acyloxy tels que par exemple acétoxy ;
- ■ . cétiminoxy tels que par exemple $ON{=}C(CH_3)C_2H_5$ ;
- ■ . aminofonctionnels tels que par exemple éthylamino, phénylamino ;
- ■ . amidofonctionnels tels que par exemple méthylacétamido ;

Parmi les radicaux organiques aliphatiques ou aromatiques mentionnés ci-dessus, on peut citer en ce qui concerne

- ■ $R^1$, $R^2$ : par exemple les groupes méthyle, éthyle, octyle, trifluoropropyle, vinyle, phényle ;
- ■ $R^3$, $R^4$ : par exemple les groupes méthyle, éthyle, octyle, vinyle, allyle, phényle ;
  $-(CH_2)_3-NH_2$ ; $-(CH_2)_3-NH-(CH_2)_2-NH_2$ ;

A titre d'exemples concrets de motifs D : $R^1R^2SiO_{2/2}$ présents dans l'huile (A) on peut citer:

$(CH_3)_2SiO_{2/2}$ ; $CH_3(CH_2{=}CH)SiO_{2/2}$ ; $CH_3(C_6H_5)SiO_{2/2}$ ; $(C_6H_5)_2SiO_{2/2}$

A titre d'exemples concrets de motifs M : $RR^3R^4SiO_{1/2}$ on peut citer :

$(CH_3)_2(OH)SiO_{1/2}$ ; $(OCH_3)_3SiO_{1/2}$ ; $[O\text{-}C(CH_3)\text{=}CH_2]_3SiO_{1/2}$ $[ON\text{=}C(CH_3)]_3SiO_{1/2}$ ; $(NH\text{-}CH_3)_3SiO_{1/2}$ ; $(NH\text{-}CO\text{-}CH_3)_3SiO_{1/2}$.

Un agent de réticulation (B) doit être mis en oeuvre lorsque l'huile (A) est un polymère $\alpha,\omega$-(dihydroxy)polydiorganosiloxane.

De nombreux agents de réticulation peuvent être utilisés selon des quantités fonctions de leur nature ; ceux-ci sont bien connus de l'homme de l'art.

On trouvera ci-dessous, à titre d'exemple, une liste d'agents de réticulation avec les quantités correspondantes préconisées, exprimées en parties en poids pour 100 parties d'huile (A) :

- ■ 0,5 à 10 parties de silicate de soude
- ■ 0,1 à 15 parties d'un organosiliconate de métal alcalin (brevet européen EP -A- 266 729)
- ■ 1 à 100 parties d'une microémulsion de résine silsesquioxane (brevets US -A- 3 355 406 ; 3 433 780)
- ■ 5 à 100 parties d'une résine silicone réactive de faible masse moléculaire présentant des groupes alcoxy et acyloxy (US -A- 4 554 187)
- ■ 5 à 100 parties d'une résine silicone de haute masse insoluble dans le toluène (EP - A- 304 719)
- ■ 5 à 100 parties d'une résine silicone hydroxylée constituée de motifs de formules $R'_3SiO_{1/2}$ (M) et/ou $R'_2SiO_{2/2}$ (D), associés à des motifs de formules $R'SiO_{3/2}$ (T) et/ou $SiO_2$ (Q), R' étant principalement un radical alkyle en $C_1$-$C_6$, vinyle et trifluoro-3,3,3 propyle et une teneur en poids en groupe hydroxyle comprise entre 0,1 et 10 %. Parmi ces résines, on peut citer tout particulièrement les résines MQ, MDQ, TDM, TD (FR-A-2 638 166).
- ■ 1 à 20 parties d'un silane de formule :

$$(R'')_u \text{ Si } X_{(4-u)}$$

formule dans laquelle R" est un radical organique monovalent, en particulier méthyle ou vinyle, u est égal à 1 ou 0, X est un groupe condensable et/ou hydrolysable organique de même définition que le radical R de la formule (I) ci-dessus (alcoxy, alcényloxy, acyloxy, cétiminoxy, alkylamino, alkylamido silanes décrits notamment dans US -A- 3 294 725 ; US-A-4 584 341 ; US-A-4 618 642 ; US-A-4 608 412 ; US-A-4 525 565 ; EP-A-387157 ; EP-A-340 120 ; EP-A-364 375 ; FR-A-1 248 826; FR - 1 023477)

A titre d'exemples on peut citer les alcoxysilanes suivants:

$Si(OC_2H_5)_4$ ; $CH_3Si(OCH_3)_3$ ; $CH_3Si(OC_2H_5)_3$ ; $(C_2H_5O)_3Si(OCH_3)$ ;
$CH_2\text{=}CHSi(OCH_3)_3$ ; $CH_3(CH_2\text{=}CH)Si(OCH_3)_2$ ; $CH_2\text{=}CH(OC_2H_5)_3$ ;
$CH_2\text{=}CHSi[ON\text{=}C(CH_3)C_2H_5]$ ; $CH_3Si[ON\text{=}C(CH_3)_2]_3$
$CH_3Si[\text{-}C(CH_3)\text{=}CH_2]_3$ ;
méthyltri(N-méthylacétamidosilane) ; méthyltris(cyclohéxylaminosilane).

Les promoteurs d"adhérence (C) sont de préférence des silanes. Ces silanes (C) éventuellement présents dans la composition des dispersions de l'invention sont des additifs permettant de moduler les propriétés physicochimiques des compositions élastomères silicone obtenues après réticulation des dispersions faisant l'objet de l'invention.

Les silanes sous-produits de réaction de synthèse des huiles (A) peuvent être représentés par la formule :

$$(R^5)c \text{ Si } (R)_{4-c}$$

formule dans laquelle :

- c est 0 ;1 ou 2
- les radicaux $R^5$, identiques ou différents, correspondent aux radicaux $R^3$ et $R^4$ de l'huile (A) de formule (I)
- le radical R correspond au radical organique R de l'huile polyorganosiloxane (A) de formule (I).

A titre d'exemples de tels silanes, on peut citer les silanes réticulants mentionnés ci-dessus. Ils sont généralement présents selon des quantités de l'ordre de 0 à 10 parties en poids, de préférence de l'ordre de 0 à 5 parties en poids pour 100 parties d'huile(s) (A).

Les silanes additifs modulateurs de propriétés physicochimiques, peuvent être notamment des agents d'adhérence tels que ceux décrits dans la demande de brevet EP-A- 340 120. On peut citer notamment l'aminopropyltriéthoxysilane, l'aminopropylméthyldiéthoxysilane ; le glycidoxypropyltriméthoxysilane. Ils sont mis en oeuvre selon des quantités pouvant aller jusqu'à 50 %, généralement de l'ordre de 0,5 à 10 % du poids d'huile(s) (A).

Les composés catalytiques de durcissement (E) sont bien connus de l'homme de l'art ; ce sont les sels d'acides carboxyliques et les halogénures de métaux tels que par exemple le plomb, le zinc, le zirconium, le titane, le fer, le baryum, le calcium, le manganèse et tout particulièrement l'étain.

On peut citer :

■ les produits de réaction de dicarboxylates d'étain et de polysilicate d'éthyle (US - A- 3 862 919),
■ les produits de réaction du diacétate de dibutylétain et d'un silicate d'alkyle ou d'un alkyltrialcoxysilane (BE-A - 842 305),
■ les bischélates d'étain (EP - A- 147 323 ; 235 049),
■ les dicarboxylates de diorganoétain (GB -A-1 289 900).

Ils peuvent être mis en oeuvre selon des quantités pouvant aller jusqu'à environ 3 parties en poids, de préférence voisines de 0,05 à 1 partie en poids pour 100 parties d'huile (A).

Les émulsifiants (F) mis en oeuvre peuvent être des tensioactifs ioniques ou non ou des polymères hydrosolubles.

De préférence, il s'agit de tensioactifs non-ioniques. A titre d'exemples, on peut citer les acides gras alcoxylés, les alkylphénols polyalcoxylés, les alcools gras polyalcoxylés, les amides gras polyalcoxylés ou polyglycérolés, les alcools et les alphadiols polyglycérolés, les polymères blocs oxyde d'éthylène-oxyde de propylène ainsi que les alkylglucosides, les alkylpolyglucosides, les sucroéthers, les sucroesters, les sucroglycérides, les esters de sorbitan et les composés éthoxylés de ces dérivés de sucres.

Selon une variante, les émulsifiants (F) sont sélectionnés parmi les agents tensioactifs anioniques tels que par exemple les alkylbenzène sulfonates, les alkylsulfates, les alkyléthersulfates, les alkylaryléthersulfates, les dioctylsulfosuccinates, de métaux alcalins.

L' (mélange d') émulsifiant(s) est choisi en fonction de la nature de l'huile silicone (A) à émulsifier ; un HLB de l'ordre de 11 à 15 est généralement choisi pour émulsifier une huile silicone (A) constituée par un polymère $\alpha,\omega$bis (hydroxy)polydiméthylsiloxane.

Le rapport pondéral eau / eau+ émulsifiant(s) (F) est fonction de la viscosité de la phase silicone ($\varphi$s) et de la nature du (mélange de) tensioactif(s) ; ce rapport est par exemple de l'ordre de 20/100 à 70/100, préférentiellement de l'ordre 25/100 à 60/100 pour stabiliser une émulsion d'une phase silicone consistant en une huile $\alpha,\omega$-dihydroxylée de viscosité de l'ordre de 30 à 500 Pa.s, à l'aide d'un nonylphénol présentant 9 ou 10 motifs éthoxy comme seul agent émulsifiant (F).

Suivant un mode de réalisation particulier de l'invention, la dispersion aqueuse silicone est obtenue par mise en oeuvre d'une suspension colloïdale de silice (D) est d'au moins un tensioactif non-ionique (F), cette silice colloïdale et ce tensioactif ou ces tensioactifs non-ioniques étant incorporés au mélange au moins en partie lors de la mise en émulsion de manière à faciliter cette dernière.

En pratique, la phase silicone ($\varphi$s) consiste en :

- ($\varphi$s1) une huile (A) de viscosité au moins égale à 10 Pa.s,
- ($\varphi$s2) un mélange d'huiles (A), mélange de viscosité au moins égale à 10 Pa.s,
- ($\varphi$s3) un mélange d'au moins une huile (A) et d'au moins un agent réticulant (B) si celui-ci est nécessaire et/ou un silane (C), mélange de viscosité d'au moins 10 Pa.s,
- ou ($\varphi$s4) un mélange d'au moins une huile (A) et du composé catalytique (E), en présence éventuellement d'au moins un silane (C).

Plus préférentiellement encore la phase silicone $\varphi$s consiste en :

- ($\varphi$s1) une huile (A) de viscosité de l'ordre de 50 à 1.000 Pa.s,
- ($\varphi$s2) un mélange d'huiles (A), mélange de viscosité de l'ordre de 50 à 1.000 Pa.s,
- ($\varphi$s3) un mélange d'au moins une huile (A) et d'au moins un agent réticulant (B) si celui-ci est nécessaire et/ou un silane (C), mélange de viscosité de l'ordre de 50 à 1.000 Pa.s,
- ou ($\varphi$s4) un mélange d'au moins une huile (A) et du composé catalytique (E), en présence éventuellement d'au moins un silane (C).

S'agissant des autres additifs fonctionnels (G) susceptibles d'être mis en oeuvre, ce sont notamment des plastifiants et/ou des sels et/ou des agents épaississants et/ou des agents dispersants de charges, ces derniers étant de préférence sélectionnés dans le groupe de produits à fonction(s) hydrophile(s) anionique(s) et plus préférentiellement encore dans le groupe comprenant les polyacrylates et/ou les (poly)phosphates.

Ces additifs peuvent également ou plus précisément être :

■ des plastifiants comme par exemple les huiles polydiméthylsiloxanes de viscosité de l'ordre de 300 à 10.000 mPa.s., les dioctylphtalates, dialkylbenzènes éventuellement en émulsion aqueuse, selon des quantités de 0 à 70 parties en poids pour 100 parties en poids d'huile (A) ;
■ des agents épaississants comme les polymères hydrosolubles de masse moléculaire supérieure à 10 000 g./mole, tels que par exemple les polyacrylates de métaux alcalins, les alcools polyvinyliques, les polyéthylènes glycols, les polyvinylpyrrolidones, les carraghénanes, les alginates, les méthylcelluloses, les hydroxyalkylcelluloses, la gomme xanthane en quantités pouvant aller jusqu'à 10 % en poids de la dispersion aqueuse finale ;
■ des agents dispersants de charges comme par exemple les polyacrylates de métaux alcalins de masse moléculaire inférieure à 5 000, les phosphates minéraux en quantités pouvant aller jusqu'à 10 % en poids de la dispersion aqueuse finale ;
■ éventuellement des pigments minéraux ou organiques en quantité inférieure à 4% de préférence à 2% poids par rapport à la masse totale de la dispersion.

Ces additifs (G) peuvent être introduits soit dans la phase silicone avant sa mise en émulsion, soit à l'émulsion avant dilution.
Selon un autre de ses aspects, la présente invention concerne un procédé de préparation de dispersion aqueuse d'huiles silicone, notamment celles décrites ci-dessus, lesquels comprennent :

-**A-** 100 parties en poids d'huile(s) (A) d'au moins une huile organopolysiloxane (A) susceptible de réticuler par condensation, si nécessaire en présence d'un agent de réticulation (B), en un élastomère ;
-**B-** si nécessaire, de 0,1 à 100 parties en poids d'au moins un agent de réticulation (B) ;
-**C-** éventuellement, jusqu'à 50 parties en poids d'au moins un promoteur d'adhérence (C) -de préférence un silane-;
-**D-** jusqu'à 200 parties en poids sec d'une charge minérale siliceuse (D) ;
-**E-** une quantité catalytiquement efficace d'un composé catalytique de durcissement (E) pouvant aller jusqu'à 3 parties en poids ;
-**F-** au moins un émulsifiant (F) ;
-**G-** au moins un additif fonctionnel (G) ;
-**H-** et de l'eau ;

ce procédé comportant les étapes essentielles suivantes :

**I** - réalisation d'une émulsion par malaxage d'un mélange constitué de :

- 100 parties en poids d'une phase silicone (φs) de viscosité dynamique à 25 °C au moins égale à 10 Pa.s., phase silicone comprenant l'huile ou mélange d'huiles (A) déjà polymérisées et éventuellement au moins un des constituants (B), (C) ou (E) ;
- 0,5-20 parties en poids d'au moins un agent émulsifiant (F), la HLB dudit agent émulsifiant ou du mélange d'agents émulsifiants étant d'au moins 10 ;
- 2-20 parties en poids d'eau ;
  le rapport pondéral eau / eau+agent(s) émulsifiant(s) étant tel que la viscosité du mélange eau + agent(s) émulsifiant(s) soit voisine de ou supérieure à la moitié de celle de la phase silicone (φs) ;
  pendant une durée et dans des conditions de cisaillement suffisantes pour obtenir une émulsion "huile dans eau" de granulométrie de l'ordre de 0,1 à 5 micromètres ;

**II** - dilution éventuelle avec de l'eau jusqu'à obtenir un extrait sec de 25 à 97%;
**III**- puis addition du ou des constituant(s) non présent(s) dans la phase silicone (φs) ;

ce procédé étant caractérisé en ce que l'on prévoit au moins une sous-étape d'incorporation d'une charge (D) sous forme de suspension(s) aqueuse(s) d'au moins un composé hydrophile,
<u>avec les conditions</u> selon lesquelles :

- dans le cas où cette charge (D) est au moins en partie constituée par au moins une suspension aqueuse de silice colloïdale, alors cette (ou ces) suspension(s) aqueuse(s) de charge (D) est (sont) introduite(s) en totalité dans l'enceinte de malaxage avant l'obtention de l'émulsion.
- dans le cas où cette charge (D) est au moins en partie constituée par une suspension aqueuse de (co)polymère(s) organique(s), alors au moins une partie de cette (ou ces) suspension(s) aqueuse(s) de charge (D) est (sont) introduite (s) dans l'enceinte de malaxage avant l'obtention de l'émulsion.

Le procédé selon l'invention présente - de préférence - toutes les caractéristiques données ci-dessus en référence à la description des dispersions silicone aqueuses selon l'invention.

Suivant une modalité préférée et spécifique du procédé selon l'invention, la ou les sous-étapes d'incorporation de la (ou les) suspension(s) aqueuse(s) de charge (D) intervient / interviennent :

- au cours de l'étape I dans une fraction comprise entre 2 et 100 % -de préférence entre 3 et 100 %- en poids sec de la quantité totale de charge (D) à l'état sec ;
- et au cours de l'étape II et/ou III, de préférence III.

Ainsi, on choisit le ou les moments d'introduction de la suspension aqueuse de charge (D) hydrophile, en fonction des caractéristiques rhéologiques et/ou mécaniques que l'on souhaite obtenir pour la dispersion silicone aqueuse selon l'invention, et en fonction de la nature de la charge (D) hydrophile.

Conformément à l'invention, au moins une partie de l'eau est apportée par la dispersion aqueuse de charge (D) hydrophile.

Il est particulièrement intéressant de contrôler dans la dispersion aqueuse silicone, au travers du constituant charge liquide la quantité d'eau amenée.

Avantageusement, la mise en émulsion "huile dans eau" de la phase silicone est réalisée :

- par introduction de l'huile silicone (A) dans un mélange eau et/ou suspension(s) aqueuse(s) de charge (D) + agent (s) émulsifiant(s) (F) ;
- ou par introduction de l'eau et/ou suspension(s) aqueuse(s) de charge (D) dans un mélange phase silicone (φs) + agent(s) émulsifiant(s) (F) et malaxage à une température de l'ordre de 10 à 50°C.

Tout appareil classique de malaxage peut être mis en oeuvre, notamment les appareils à agitation lente. Ainsi, l'opération de malaxage peut être réalisée dans un malaxeur muni d'un agitateur, agitateur dont la partie mobile ne tourne pas :

- à plus de 2500 tours/mn avec une vitesse tangentielle en extrémité de partie mobile ne dépassant pas 20m/s ; et un rapport vitesse tangentielle en extrémité de partie mobile / distance entre l'extrémité de la partie mobile et la paroi du malaxeur inférieur à $50000s^{-1}$;
- à plus de 1500 tours/mn avec une vitesse tangentielle en extrémité de partie mobile ne dépassant pas 5 m/s et un rapport vitesse tangentielle en extrémité de partie mobile / distance entre l'extrémité de la partie mobile et la paroi du malaxeur inférieur à $10000s^{-1}$;
- à plus de 500 tours/mn avec une vitesse tangentielle en extrémité de partie mobile ne dépassant pas 2,5 m/s et un rapport vitesse tangentielle en extrémité de partie mobile / distance entre l'extrémité de la partie mobile et la paroi du malaxeur inférieur à $2500s^{-1}$;

A titre d'exemple, on peut citer les extrudeuses à vis simple ou multiple(s), les malaxeurs planétaires, les malaxeurs à crochet, les disperseurs lents, les malaxeurs statiques, les malaxeurs à pale, à hélice, à bras, à ancre.

Après dilution éventuelle du milieu, les constituants de la dispersion de l'invention non présents dans l'émulsion "huile dans eau" ainsi préparée, à savoir :

- ■ dans le cas de l'émulsion de la phase silicone (φ1), (φ2) ou (φ3), le composé catalytique (E) de préférence sous forme d'une émulsion aqueuse et les autres constituants éventuels non présents dans lesdites phases ;
- ■ dans le cas de l'émulsion de la phase silicone (φ4), l'agent de réticulation (B) si celui-ci est nécessaire ainsi que les autres constituants éventuels non présents dans ladite phase ;
- ■ et dans tous les cas, une éventuelle suspension de charge (D) ;

sont introduits et dispersés dans le milieu par malaxage dans un malaxeur (étape III) du même type que ceux précédemment cités, de préférence dans celui ayant servi à l'émulsification (étape I).

Les différents constituants de la dispersion de l'invention sont présents en quantités telles que le taux d'extrait sec soit supérieur à 40 %, généralement de l'ordre de 70 à 97 % ; le pH est ajusté entre 4 et 13 par ajout d'acides ou de bases organiques ou minérales (par exemple potasse, amines).

La dispersion finale obtenue est homogénéisée puis dégazée ; elle est ensuite conditionnée en emballage étanche à l'air et à la vapeur d'eau.

Avantageusement, ce procédé comprend au moins une sous-étape d'incorporation d'une charge (D') sous forme pulvérulente et qui présente une surface spécifique Ss (en $m^2/g$) telle que :

$$Ss \leq 5$$

de préférence $Ss \leq 3$

Enfin, la présente invention vise l'utilisation des dispersions aqueuses silicone décrites ci-dessus en tant que telles ou en tant que produits obtenus par le procédé également défini ci-dessus, pour la confection de peintures élastomère, d'agents hydrofugeants de façades, de joints d'étanchéité, de produits élastomère ignifuges, de mastics concentrés, de produits d'enduction élastomérique, de revêtements protecteurs hydrofuges ou ignifuges et éventuellement puivérisables (en couche mince ou épaisse) ainsi que de revêtements pour application en roofing, (c'est-à-dire des revêtements élastomères silicone sur des mousses polymère (par exemple polyméthane bicomposant) utilisées notamment pour l'isolation de toits de bâtiments).

Selon un autre de ses objets, l'invention concerne également un mastic concentré à base de la dispersion décrite ci-dessus. Ce mastic est caractérisé en ce que qu'il présente un extrait sec supérieur ou égal à 80 % en poids, de préférence supérieur ou égal à 85 % en poids.

Pour préparer un tel mastic concentré, il est avantageux de mettre en oeuvre une suspension colloïdale aqueuse de charge (D) titrant de 40-85 % en poids de (D) sur sec, et de préférence de 65 à 80 % en poids de (D) sur sec.

Les exemples sont donnés à titre indicatif et ne peuvent être considérés comme une limite du domaine et de l'esprit de l'invention.

## EXEMPLES

**<u>Méthodes d'évaluations:</u>**

### Protocole de mesure du taux de coalescence T de l'émulsion dans le mastic

Le taux d'émulsion résiduelle dans le produit final est déterminé selon le protocole **P** suivant: on réalise une dilution à 10 % du produit dans de l'eau déminéralisée, par agitation avec un barreau magnétique pendant 20 min. Le produit dilué est rapidement transvasé dans un godet de centrifugation, et centrifugé pendant 30 min à 3000 tours/min dans une centrifugeuse type Heraeus Chris 1729/1800 afin de séparer les charges solides. La phase non solide (émulsion) est prélevée et son extrait sec est mesuré par séchage dans une thermobalance à infrarouges type Mettler (4 g séchés pendant 1 heure avec une température de consigne de 120°C). On compare alors l'extrait sec de l'émulsion diluée ainsi mesurée avec l'extrait sec théorique calculé à partir de la composition en supposant que l'émulsion initiale est intacte et en intégrant le taux de dilution. Si l'émulsion n'est pas cassée lors de la formulation avec les charges le taux d'émulsion résiduelle est de 100 %, quand une coalescence totale de l'émulsion s'est produite au cours du malaxage avec les charges ce taux est nul. Le taux d'émulsion résiduelle est défini par la relation :

$$T\,(\%) = 100 \times (\text{Extrait sec mesuré}) / (\text{Extrait sec théorique})$$

Le taux d'émulsion coalescée (ou cassée) lors du mélangeage avec les charges est C (%) = 100 - T

*Nota : il a été vérifié qu'en appliquant le protocole* à *une émulsion non malaxée en présence de charges, la mesure permet de retrouver l'extrait sec théorique soit T = 100 % d'émulsion résiduelle.*

Mesure des propriétés mécaniques :

Le mastic est étalé en film de 2 mm (avec un râcle calibré) sur une feuille antiadhérente en terphane de façon à pouvoir mesurer après séchage (7 jours en salle conditionnée à 23 °C et 50 % HR) les propriétés mécaniques suivantes:

- la dureté Shore A selon la norme ASTM-D-2240 (sur 3 films de 2 mm empilés)
- la résistance à la rupture (en MPa) selon la norme AFNOR-T 46 002 correspondant à ASTM-D 412,
- l'allongement à la rupture (en %) selon AFNOR-T 46 002,
- le module élastique à 100 % d'allongement (en MPa) selon la norme AFNOR-T 46 002,

### Evaluation de l'adhérence :

Enfin l'adhérence du mastic sur plusieurs supports (verre, alu, PVC, ...) est appréciée par pelage manuel d'un film de 0,5 mm d'épaisseur séchée pendant 14 jours sur le support étudié.

**Exemple 1 - Mastic à base de slurry de $CaCO_3$ introduit à l'émulsification :**

Dans la cuve d'un réacteur IKA de laboratoire, équipé d'un agitateur à ancre râclante, introduction de 465 g d'huile - (A) - 48V135 000, de 35 g d'huile - (A) - 47V100 de RHODIA (huile polydiméthylsiloxane de 100 mPa.s de viscosité), de 5 g de résine / réticulant - (B) -, de 23,5 g de rhodasurf ROX - (F) - et de 27,5 g d'Omyacoat - (D) - 80. Par agitation à 80 trs/min on obtient rapidement une émulsion huile/eau, on maintient néanmoins l'agitation pendant 45 min dans le but de bien affiner et homogénéiser la dispersion aqueuse. Après introduction de 625 g d'Omyacoat 80 - (D) - supplémentaire on agite encore pendant 25 min avant d'ajouter (toujours avec la même vitesse d'agitation) 32,5 g de VS142 - promoteur silane (C) - (en 5 min), 350 g de BLR3 ($CaCO_3$ de faible surface spécifique) (en 5 min), et 1,8 g de 70827 A - émulsion (en 5 min). Le mastic final est dégazé par agitation 5 min sous un vide de 30 mbars puis conditionné en cartouches en polyéthylène. Pendant tout l'essai la température est maintenue entre 16 et 21 °C par circulation d'eau froide dans la double enveloppe du mélangeur. L'extrait sec du produit final est de 86,4 % Les caractéristiques et propriétés du mastic sont rassemblées dans le tableau 1.

L'émulsification en présence de charge prédispersée offre la possibilité de réaliser des dispersions concentrées et à faible taux de tensioactif (adhérentes) :

**Exemple 2 (comparatif) - Mastic à base de CaCO3 en poudre (Socal 312 - formule standard) :**

L'objectif de cet essai comparatif est de refaire l'exemple 1 en remplaçant le slurry de $CaCO_3$ par le $CaCO_3$ de haute surface spécifique en poudre, mais pour prévenir la coalescence de l'émulsion on augmente la teneur en tensioactif et introduit le dispersant polyacrylate. Le test de coalescence permet de montrer que moyennant cette modification l'émulsion n'est pas perturbée par l'ajout de la charge pulvérulente mais elle présente une adhérence moindre sur les différents supports ciblés pour l'application du produit.

**Réalisation de l'essal :**

Dans la cuve d'un réacteur IKA de laboratoire, équipé d'un agitateur à ancre râlante, introduction de 558 g d'huile - (A) - 48V135 000, de 42 g d'huile - (A) - 47V100 de RHODIA (huile polydiméthylsiloxane de 100 mPa.s de viscosité), de 6 g de résine réticulant (B) - , de 42 g de rhodasurf ROX - tensioactif (F) - et de 13,2 g d'eau déminéralisée. Par agitation à 80 trs/min on obtient rapidement une émulsion huile/eau, on maintient néanmoins l'agitation pendant 40 min ce qui permet d'obtenir une granulométrie moyenne de 0,5 μm. L'émulsion est diluée par ajout progressif de 129,6 g d'eau déminéralisée - (H) - et agitation pendant 30 min. Après avoir baissé la vitesse d'agitation à 60 trs/min introduction successive sous agitation de 14,4 g de Coatex P50 - dispersant polyacrylate (G) - (en 5 min), 39 g de VS142 - promoteur d'adhérence = silane (C) - (en 5 min), 300 g de $CaCO_3$ poudre Socal 312 (charge D') (en 10 min), 300 g de BLR3 $CaCO_3$ poudre de faible surface spécifique (charge D') (en 10 min), et 2 g de 70827 A - émulsion catalytique (E) - (en 5 min). Le mastic final est dégazé par agitation 5 min sous un vide de 30 mbars puis conditionné en cartouches en polyéthylène.

L'extrait sec du produit final est de 86,8 %

Les caractéristiques et propriétés du mastic sont rassemblées dans le tableau 1.

**Exemple 2 bis (comparatif) - Mastic à base de CaCO3 hydrophile en poudre (Socal 31) :**

*L'exemple 4 est reproduit en remplaçant le Socal 132 par le Socal 31, Les propriétés du mastic n'ont pas été mesurées, car son aspect est très granuleux.*

Tableau 1

| | **Exemple 1 (slurry de CaCO3)** | **Exemple 2 (CaCO3 traité, en poudre)** |
|---|---|---|
| **Taux d'émulsion résiduelle T** | **98** % | **97%** |
| Taux d'émulsion coalescée C | 2% | 3% |
| Coulabilité Boeing (mm) | 0 | 0 |
| Aspect des films de 2 mm | Lisse | lisse |
| | | |
| **Propriétés mécaniques mesurées après 1 mois en cartouche et séchage 7 Jours :** | | |

(suite)

| | Exemple 1 (slurry de CaCO3) | Exemple 2 (CaCO3 traité, en poudre) |
|---|---|---|
| Dureté (shores A) | 23 | 16 |
| Résistance à la rupture (MPa) | 0,92 | 0,65 |
| Allongement à la rupture (%) | 402 | 523 |
| Module à 100 % d'allongement (MPa) | 0,47 | 0,30 |
| | | |
| **Adhérence évaluée par pelage après 1 mois en cartouche et séchage 7 jours sur le support (épaisseur du film silicone de 2 à 3 mm) :** | | |
| Adhérence sur verre | Bonne | Bonne |
| Adhérence sur bois | Bonne | Bonne |
| Adhérence sur aluminium anodisé | Bonne | Bonne |
| Adhérence sur béton | Bonne | Faible |
| Adhérence sur PVC | Légère | Nulle |
| Adhérence sur mousse en PUR | Bonne | Médiocre |

Il ressort de ces essais qu'en remontant la dose de tensioactif la composition à base de $CaCO_3$ en poudre retrouve un taux d'émulsion résiduelle élevé, mais au détriment de l'adhérence qui sur plusieurs supports est plus faible par rapport à celle développée par la composition à base du slurry de carbonate hydrophile.

**Exemple 3- Mastic à base de silice colloidale introduite à l'émulsification :**

Dans la cuve d'un réacteur IKA de laboratoire, équipé d'un agitateur à ancre râclante, introduction de 480 g d'huile - (A) - 48V135 000, de 120 g (25%) de Progiline 155 de CHEVRON - tensioactif (F) - (alkylbenzène), de 45 g (9,3%) de résine réticulant (B) -, de 10,6 g (2,2%) de rhodasurf ROX - tensioactif (F) - et de 150 g (31,25%) de Ludox TM50 de DUPONT - charge liquide + poudre (D) - (dispersion aqueuse de silice colloidale à 50 % (15,6%) de SiO2), Par agitation à 100 trs/min on obtient rapidement une émulsion huile/eau, on maintient néanmoins l'agitation pendant 1 H 30 dans le but de bien affiner et homogénéiser la dispersion aqueuse dont la granulométrie moyenne déterminée au COULTER 130 est de 1,85 μm. Cette émulsion est diluée par coulée progressive de 30,2 g d'eau déminéralisée en 10 min et sous agitation. On ajoute ensuite (toujours avec la même vitesse d'agitation) 42 g de VS142 - promoteur de silane (C) - (en 5 rrin), puis 3 g de 70827 A - émulsion catalytique (E) - (en 5 min). Le mastic final est dégazé par agitation 5 min sous un vide de 35 mbars puis conditionné en cartouches en polyéthylène. Pendant tout l'essai, la température est maintenue entre 16 et 22 °C par circulation d'eau froide dans la double enveloppe du mélangeur. La granulométrie moyenne de la dispersion finale est de 1,5 μm et son extrait sec est de 84%.

Les caractéristiques et propriétés du mastic sont rassemblées dans le tableau 2.

**Exemple 4 - Mastic à base de silice colloïdale Introduite avant l'émulsification :**

Dans la cuve d'un réacteur IKA de laboratoire, équipé d'un agitateur à ancre râclante, introduction de 70C g d'huile - (A) - 48V135 000, de 49 g de résine - réticulant (B) - de 12,4 g de rhodasurf ROX - tensioactif (F) - et de 218,8 g de Snowtex 40 - charge (D) en suspension = de NISSAN Chem.Ind. Ltd (dispersion aqueuse de silice colloïdale à 40 % de SiO2). Par agitation à 100 trs/min on obtient rapidement une émulsion huile/eau, on maintient néanmoins l'agitation pendant 2 H dans le but de bien affiner et homogénéiser la dispersion aqueuse dont la granulométrie moyenne déterminée au COULTER 130 est de 2,85 μm. On ajoute ensuite 45,5 g de VS142 - promoteur d'adhérence silane (C) - (en 5 min), puis 3,5 g de 70827 A - émulsion catalytique (E) - (en 5 min). Le mastic final est dégazé par agitation 5 min sous un vide de 37 mbars puis conditionné en cartouches en polyéthylène. Pendant tout l'essai la température est maintenue entre 19 et 25 °C par circulation d'eau froide dans la double enveloppe du mélangeur.

La granulométrie moyenne de la dispersion finale est de 1,3 μm et son extrait sec est de 85,6 %.

Les caractéristiques et propriétés du mastic sont rassemblées dans le tableau 2.

**Exemple 5 comparatif - Mastic à base de silice en Poudre (essai Thixosil365) :**

Dans la cuve d'un réacteur IKA de laboratoire, équipé d'un agitateur à ancre râclante, introduction de 800 g d'huile - (A) - 48V135 000, de 24 g de résine - réticulant (B) - , de 18,8 g de rhodasurf ROX - tensioactif (F) - et de 40 g de Ludox TM50 - charge liquide + poudre (D) - . Par agitation à 100 trs/min on obtient rapidement une émulsion huile/eau, on maintient néanmoins l'agitation pendant 2 h dans le but de bien affiner et homogénéiser la dispersion aqueuse dont la granulométrie moyenne déterminée au COULTER 130 est de 2,5 $\mu$m. On réduit la vitesse d'agitation à 60 trs/min, dilue l'émulsion par coulée de 109,5 g d'eau déminéralisée, puis introduit 40 g de Thixosil 365 de RHODIA (silice précipitée en poudre, de **haute surface spécifique**) que l'on disperse en 20 min sous agitation. On ajoute ensuite (toujours avec la même vitesse d'agitation) 52 g de VS142 - promoteur d'adhérence (C) - (en 5 min), puis 2,6 g de 70827 A (en 5 min). Le mastic final est dégazé par agitation 5 min sous un vide de 37 mbars puis conditionné en cartouches en polyéthylène. Son extrait sec est égal à 84 %.

Pendant tout l'essai la température est maintenue entre 20 et 26°C par circulation d'eau froide dans la double enveloppe du mélangeur.

Les caractéristiques et propriétés du mastic sont rassemblées dans le tableau 2.

Tableau 2 :

| | **Exemple 3** | **Exemple 4** | **Exemple 5** |
|---|---|---|---|
| Coulabilité Boeing (mm) | 0 | 0 | - |
| Aspect des films de 2 mm | lisse | lisse | - |
| | | | |
| **Propriétés mécaniques mesurées après 1 mois en cartouche et séchage 7 jours :** | | | **Le produit s'extrude encore de la cartouche, mais il ne peut plus être étalé avec une spatule car il est élastique** |
| Dureté (shores A) | 10 | 19 | Non mesurable |
| Résistance à la rupture (MPa) | 0,61 | 1,15 | Non mesurable |
| Allongement à la rupture (%) | 379 | 494 | Non mesurable |
| Module à 100 % d'allongement (MPa) | 0,20 | 0,34 | Non mesurable |
| | | | |
| **Adhérence évaluée par postage après 1 mois en cartouche et séchage 7 jours sur le support (épaisseur du film silicone de 2 à 3mm):** | | | |
| Adhérence sur verre | Bonne | Bonne | Non mesurable |
| Adhérence sur bois | Bonne | Bonne | Non mesurable |
| Adhérence sur aluminium anodisé | Bonne | Bonne | Non mesurable |
| Adhérence sur béton | Moyenne | Moyenne | Non mesurable |
| Adhérence sur PVC | Bonne | Bonne | Non mesurable |

Bien que formulé avec une composition très voisine des essais précédents (taux de tensioactif et d'espèces réactives) mais avec une charge (D) en poudre de haute surface spécifique, le mastic de l'exemple 5 préparé avec la silice hydrophile en poudre n'est pas stable et gélifie après quelques semaines de stockage en cartouche à température ambiante. Les compositions des exemples 3 et 4 par contre se conservent en cartouche dans les mêmes conditions pendant plus de 1 an.

## Revendications

1. Dispersion aqueuse d'huile (s) silicone comprenant :

-A- 100 parties en poids d'au moins une huile polyorganosiloxane (A) susceptible de réticuler par condensation, si nécessaire en présence d'un agent de réticulation (B), en un élastomère;
-B- si necessaire de 0,1 à 100 parties en poids d'au moins un agent de réticulation (B);
-C- éventuellement, jusqu'à 50 parties en poids d'au moins un promoteur d'adhésion (C) -de préférence un silane-;
-D- jusqu'à 200 parties en poids sec d'une charge (D), sélectionnée dans le groupe de composés hydrophiles comprenant la silice colloïdale, la silice de précipitation, la silice de pyrogénation, $CaCO_3$, $TiO_2$, $Al_2O_3/H_2O$, (co)polymère(s) organique(s) en émulsion et leur mélanges;
-E- une quantité catalytiquement efficace d'un composé catalytique de durcissement (E) pouvant aller jusqu'à 3 parties en poids;
-F- au moins un émulsifiant (F);
-G- éventuellement au moins un additif fonctionnel (G);
-H- et de l'eau;

ladite dispersion étant obtenue:

- par réalisation d'une émulsion par malaxage d'un mélange constitué de :

  - 100 parties en poids d'une phase silicone (φs) de viscosité dynamique à 25 °C au moins égale à 10 Pas, de préférence à 50 Pas et, plus préférentiellement encore à 70 Pa s, φs comprenant l'huile ou un mélange d'huiles (A) déjà polymérisée (s) et éventuellement au moins un des constituants (B), (C) ou (E);
  - 0,5 - 20 parties en poids d'au moins un agent émulsifiant (F), la HLB dudit agent émulsifiant ou du mélange d'agents émulsifiants étant d'au moins 10;
  - 0 -100 parties en poids, 0 étant exclu, de charge(D);
  - 2 - 20 parties en poids d'eau;

le rapport pondéral eau / eau + agent(s) tensioactif(s) étant tel que la viscosité du mélange eau + agent(s) tensioactif(s) soit voisine de ou supérieure à la moitié de celle de la phase silicone(φs);
pendant une durée et dans des conditions de cisaillement suffisantes pour obtenir une émulsion"huile dans eau" de granulométrie de l'ordre de 0,1 à 5 micromètres:
- par dilution éventuelle avec de l'eau jusqu'à obtenir un extrait sec de 25 à 97%;
- puis par addition

  - du ou des constituant(s) non présent(s) dans la phasesilicone (φs)
  - et/ou de 0 -100 parties en poids de charge(D);

**caractérisée**
**en ce que** entre 2 de 100 % en poids sec de la quantité totale de la charge (D) est apportée, dans le processus d'obtention de la dispersion, sous forme de suspension(s) aqueuse(s) d'au moins un composé hydrophile, dans l'enceinte de malaxage avant l'obtention de l'émulsion et
avec les conditions selon lesquelles:

- dans le cas où la charge (D) apportée dans le processus d'obtention de la dispersion, est au moins en partie constituée par au moins une suspension aqueuse de silice colloïdale, alors cette (ou ces) suspension(s) aqueuse (s) de charge (D) est (sont) introduite(s) dans l'enceinte de malaxage avant l'obtention de l'émulsion; et

**en ce que** l'émulsifiant (F) est sélectionné parmi les tensioactifs non-ionique.

**2.** Dispersion selon la revendication 1 **caractérisée en ce qu'**elle présente un taux d'émulsion résiduelle **T** (%) mesuré selon un protocole **P** tel que :

| | |
|---|---|
| | **T** ≥ 70 |
| de préférence | **T** ≥ 80 |
| et plus préférentiellement encore | **T** ≥ 85 |

**3.** Dispersion selon la revendication 1 ou 2 **caractérisée en ce que** cette (ou ces) suspension(s) aqueuse(s) de charge

(D) est (sont) Introduite(s) en totalité ou en partie dans l'enceinte de malaxage avant l'obtention de l'émulsion ; la fraction de suspension(s) de charge (D) pouvant être introduite avant l'obtention de l'émulsion, étant comprise entre 3 et 100 %- en poids sec de la quantité totale de charge (D) prise à l'état sec.

**4.** Dispersion selon l'une quelconque des revendications 1 ou 3 **caractérisée en ce que** la totalité de l'eau nécessaire à la réalisation de l'émulsion provient de la (ou des) suspension(s) aqueuse(s) apportant la charge (D).

**5.** Dispersion selon l'une quelconque des revendications 1 à 4 **caractérisée en ce qu'**elle comprend une charge (D') qui est apportée dans le processus d'obtention de la dispersion, sous forme pulvérulente et qui présente une surface spécifique Ss (en $m^2/g$ ) telle que :

$$Ss \leq 5$$

de préférence $Ss \leq 3$.

**6.** Dispersion aqueuse selon l'une quelconque des revendications 1 à 5 **caractérisée en ce que** les huiles (A) sont des huiles $\alpha,\omega$-hydroxylées ou des huiles fonctionnelles comportant par molécule au moins 2 groupes fonctionnels condensables éventuellement après hydrolyse.

**7.** Dispersion aqueuse selon l'une quelconque des revendications 1 à 6, **caractérisée en ce que** les huiles (A) ont pour formule générique (I)

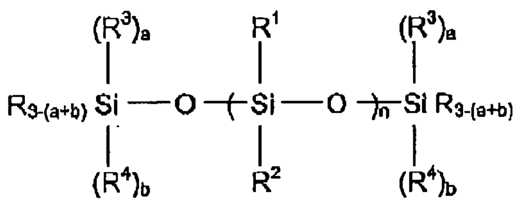

formule dans laquelle

- a est 0 ou 1
- b est 0 ou 1
- avec a+b = 0 ; 1 ou 2
- n a une valeur suffisante pour conférer au polymère de formule (a) la viscosité désirée
- les radicaux R sont identiques ou différents et représentent
  - ■ un groupe OH avec a+b = 2 ;
  - ■ un groupe alcoxy ou alcényloxy contenant de 1 à 10 atomes de carbone ;
  - ■ un groupe aryloxy contenant de 6 à 13 atomes de carbone ;
  - ■ un groupe acyloxy contenant de 1 à 13 atomes de carbone ;
  - ■ un groupe cétiminoxy contenant de 1 à 8 atomes de carbone ;
  - ■ un groupe amino- ou amido-fonctionnel contenant de 1 à 6 atomes de carbone, liés au silicium par une liaison Si-N ;
- les radicaux $R^1$ et $R^2$sont identiques ou différents et représentent des groupes organiques aliphatiques alkyle, alcényle, ayant de 1 à 10 atomes de carbone, aromatiques phenyle, lesdits groupes étant éventuellement substitués par des atomes d'halogènes ou des groupes cyano ;
- les radicaux $R^3$ et $R^4$ sont Identiques ou différents et représentent des groupes organiques aliphatiques alkyle, aminoalkyle, polyaminoalkyle, époxyalkyle, alcényle, contenant de 1 à 13 atomes de carbone, aromatiques aryle contenant de 6 à 13 atomes de carbone ;

au moins 2 groupes fonctionnels condensables éventuellement après hydrolyse étant présents par molécule,

**8.** Dispersion selon la revendication 7, **caractérisée en ce qu'**au moins 80 % des radicaux $R^1$ à $R^4$ représentant un groupe méthyle.

**9.** Dispersion aqueuse selon l'une quelconque des revendications 1 à 8, **caractérisée en ce que** le promoteur d'adhérence ,de préférence le silane (C), a pour formule:

$$(R^5)c\ Si\ (R)_{4-c}$$

formule dans laquelle :

- c est 0 ;1 ou 2
- les radicaux $R^5$, identiques ou différents, correspondent aux radicaux $R^3$ et $R^4$ de l'huile (A) de formule (I)
- le radical R correspond au radical organique R de l'huile polyorganosiloxane (A) de formule (I)
- ledit silane étant présent selon des quantités de l'ordre de 0 à 10 parties en poids pour 100 parties d'huile(s) (A).

**10.** Dispersion aqueuse selon l'une quelconque des revendications 1 à 9, **caractérisée en ce que** le promoteur d'adhérence, de préférence le silane (C), est un additif modulateur d'adhérence tel que l'aminopropyltriéthoxysilane, l'aminopropylméthyldiéthoxysilane, le glyclooxypropyl-triméthoxysilane, présent selon des quantités pouvant aller Jusqu'à 50 % du poids d'huile(s) (A),

**11.** Dispersion aqueuse selon l'une quelconque des revendications 1 à 10, **caractérisée en ce que** le composé catalytique de durcissement (E) est un dérivé de l'étain, mis en oeuvre selon des quantités pouvant aller de 0,05 à 1 partie en poids pour 100 parties d'huile (A).

**12.** Dispersion aqueuse selon l'une quelconque des revendications 1 à 11, **caractérisée en ce que** la phase silicone (φs) consiste en :

- (φs1) une huile (A) de viscosité au moins égale à 10 Pa.s,
- (φs2) un mélange d'huiles (A), mélange de viscosité au moins égale à 10 Pa.s,
- (φs3) un mélange d'au moins une huile (A) et d'au moins un agent réticulant (B) si celui-ci est nécessaire et/ou un silane (C), mélange de viscosité d'au moins 10 Pa.s,
- ou (φs4) un mélange d'au moins une huile (A) et du composé catalytique (E), en présence éventuellement d'au moins un silane (C).

**13.** Dispersion aqueuse selon la revendication 12, **caractérisée en ce que** la phase silicone (φs) consiste en :

- (φs1) une huile (A) de viscosité de l'ordre de 50 à 1.000 Pa.s,
- (φs2) un mélange d'huiles (A), mélange de viscosité de l'ordre de 50 à 1.000 Pa.s,
- (φs3) un mélange d'au moins une huile (A) et d'au moins un agent réticulant (B) si celui-ci est nécessaire et/ou un silane (C), mélange de viscosité de l'ordre de 50 à 1.000 Pa.s,
- ou (φs4) un mélange d'au moins une huile (A) et du composé catalytique (E), en présence éventuellement d'au moins un silane (C).

**14.** Dispersion aqueuse selon l'une quelconque des revendications 1 à 13, **caractérisée en ce qu'**elle contient en outre des additifs fonctionnels (G), des plastifiants et/ou des agents épaississants et/ou des agent3 dispersants de charges, ces derniers étant de préférence sélectionnés dans le groupe de produits à fonction(s) hydrophile(s) anionique(s) et plus préférentiellement encore dans le groupe comprenant les polyacrylates et/ou les (poly)phosphates.

**15.** Procédé de préparation d'une dispersion aqueuse d'huile silicone comprenant :

-A- 100 parties en poids d'huile(s) (A) d'au moins une huile organopolysiloxane (A) susceptible de réticuler par condensation, si nécessaire en présence d'un agent de réticulation (B), en un élastomère ;
-B- si nécessaire, de 0.1 à 100 parties en poids d'au moins un agent de réticulation (B) ;
-C- éventuellement, jusqu'à 5D parties en poids d'au moins un promoteur d'adherence (C) -de préférence un silane-;
-D- jusqu'à 200 parties en poids sec d'une charge minérale siliceuse (D) ;
-E- une quantité catalytiquement efficace d'un composé catalytique de durcissement (E) pouvant allerjusqu'à 3 parties en poids ;
-F- au moins un émulsifiant (F) ;
-G- au moins un additif fonctionnel (G)
-H- et de l'eau ;

ce procédé comportant les étapes essentielles suivantes :

I - réalisation d'une émulsion par malaxage d'un mélange constitué de :

· 100 parties en poids d'une phase silicone (φs) de viscosité dynamique à 25 °C au moins égale à 10 Pa.s., phase silicone comprenant l'huile ou mélange d'huiles (A) déjà polymérisées et éventuellement au moins un des constituants (B), (C) ou (E) ;
. 0,5-20 parties en poids d'au moins un agent émulsifiant (F), la HLB dudit agent émulsifiant ou du mélange d'agents émulsifiants étant d'au moins 10 ;
. 2-20 parties en poids d'eau ;

le rapport pondéral eau / eau + agent(s) émulsifiant(s) étant tel que la viscosité du mélange eau + agent(s) émulsifant(s) soit voisine de ou supérieure à la moitié de celle de la phase silicone (φs) ;
pendant une durée et dans des conditions de cisaillement suffisantes pour obtenir une émulsion "huile dans eau" de granulométrie de l'ordre de 0,1 à 5 micromètres ;
II - dilution éventuelle avec de l'eau jusqu'à obtenir un extrait sec de 25 à 97%;
III - puis addition du ou des constituant non présent(s) dans la phase silicone (φs) ;

ce procédé étant **caractérisé en ce que** l'on prévoit au moins une sous-étape d'incorporation d'une charge (D) sous forme de suspension(s) aquause(s) d'au moins un composé hydrophile,
avec les conditions selon lesquelles:

. dans le cas où cette charge (D) est au moins en partie constituée par au moins une suspension aqueuse de silice colloïdale, alors cette (ou ces) suspension(s) aqueuse(s) de charge (D) est (sont) introduite(s) en totalité dans l'enceinte de malaxage avant l'obtention de l'émulsion.
. dans le cas où cette charge (D) est au moins en partie constituée par une suspension aqueuse de (co)polymère (s) organique(s), alors au moins une partie de cette (ou ces) suspension(s) aqueuse(s) de charge (D) est (sont) introduite(s) dans l'enceinte de malaxage avant l'obtention de l'émulsion.

**16.** Procédé selon la revendication 15 **caractérisé en ce qu'**il présente les caractéristiques telles que définies dans au moins l'une des revendications 1 à 15.

**17.** Procédé selon la revendication 15 ou la revendication 16 carectérisé en ce que la ou les sous-étapes d'incorporation de la (ou les) suspension(s) aqueuse(s) de charge (D) Intervient / interviennent :

- au cours de l'étape I dans une fraction comprise entre 2 et 100 % -de préférence entre 3 et 100 %- en poids sec de la quantité totale de chafge (D) à l'état sec ;
- et au cours de l'étape II et/ou III, de préférence III.

**18.** Procédé selon l'une quelconque des revendications 15 à 17 caractérisé en ce tout ou partie de l'eau de la dispersion est apportée par la (ou les) suspension(s) aqueuse(s) de charge (D),

**19.** Procédé selon l'une quelconque des revendications 15 à 18, **caractérisé en ce que** l'obtention de l'émulsion "huile dans eau" de la phase silicone (φs) est réalisée :

- par introduction de l'huile silicone (A) dans un mélange eau et/ou suspension(s) aqueuse(s) de charge (D) + agent(s) émulsifiant(s) (F) ;
- ou par introduction de l'eau et/ou suspension(s) aqueuse(s) de charge (D) dans un mélange phase silicone (φs) + agent(s) émulsifiant(s) (F) et malaxage à une température de l'ordre de 10 à 50°C.

**20.** Procédé selon l'une quelconque des revendications 15 à 19, **caractérisé en ce que** le malaxage de l'étape III est opéré dans le malaxeur ayant servi à la réalisation de l'émulsion (étape I).

**21.** Procédé selon l'une quelconque des revendications 15 à 20 **caractérisé en ce que** l'opération de malaxage est réalisée dans une extrudeuse à vis simple ou multlple(s), un malaxeur planétaire, un malaxeur à crochet, un disperseur lent, un malaxeur statique, un malaxeur à pale, à hélice, à bras, à ancre.

**22.** Procédé selon l'une quelconque des revendications 15 à 20 **caractérisé en ce qu'**il comprend au moins une sous-étape d'incorporation d'une charge (D') sous forme pulvérulente et qui présente une surface spécifique Ss (en $m^2/g$) telle que :

$$Ss \leq 5$$

de préférence $Ss \leq 3$.

**23.** Utilisation des dispersions aqueuses selon l'une quelconque des revendications 1 à 14 pour la confection de peintures élastomères, d'agents hydrofugeants de façades, de joints d'étanchéité, de produits élastomères ignifuges, de revêtements pour mousse polymère (de préférence polyuréthane ; "roofing"), ou de mastics.

**24.** Mastic concentré résultant de l'utilisation selon la revendication 23 **caractérisée en ce qu'**il présente un extrait sec supérieur ou égal à 80 % en poids, de préférence supérieur ou égal à 85 % en poids.

## Claims

**1.** An aqueous dispersion of silicon oil(s) comprising:

-A- 100 parts by weight of at least one polyorganosiloxane oil (A) which may crosslink by condensation, if necessary in the presence of a crosslinking agent (B), into an elastomer;
-B- if necessary from 0.1 to 100 parts by weight of at least one crosslinking agent (B);
-C- optionally, up to 50 parts by weight of at least one adhesion promoter (C) - preferably a silane -;
-D- up to 200 parts by dry weight of a filler (D), selected from the group of hydrophilic compounds comprising colloidal silica, precipitation silica, pyrogenation silica, $CaCO_3$, $TiO_2$, $Al_2O_3/H_2O$, organic (co)polymer(s) as an emulsion and mixtures thereof;
-E- a catalytically efficient amount of a catalytic curing compound (E) which may range up to 3 parts by weight;
-F- at least one emulsifier (F);
-G- optionally one functional additive (G);
-H- and water;

said dispersion being obtained;

- by making an emulsion by kneading a mixture consisting of:

  - 100 parts by weight of a silicone phase (φs) with a dynamic viscosity at 25°C at least equal to 10 Pa.s, preferably 50 Pa.s and still more preferentially 70 Pa.s, φs comprising the already polymerized oil or a mixture of already polymerized oils (A) and optionally at least one of the constituents (B), (C) or (E);
  - 0.5-20 parts by weight of at least one emulsifier agent (F), the HLB of said emulsifying agent or of the mixture of emulsifiers being at least 10;
  - 0-100 parts by weight, 0 being excluded, of filler (D);
  - 2-20 parts by weight of water;

the (water/water + surfactant(s)) weight ratio being such that the viscosity of the water surfactants mixture is close to or greater than half of that of the silicone phase (φs);
for a duration and under sufficient shearing conditions for obtaining an oil-in-water emulsion with a grain size of the order of 0.1 to 5 micrometers.
- by optionally diluting with water until a 25-97% dry extract is obtained;
- and then by adding

  - the constituent(s) not present in the silicone phase (φs)
  - and/or 0-100 parts by weight of filler (D);

**characterized**
**in that** between 2 and 100% by dry weight of the total amount of the filler (D) is provided in the process for obtaining the dispersion, as aqueous suspension(s) of at least one hydrophilic compound, in the kneading enclosure before obtaining the emulsion and

with conditions according to which:

- in the case when the provided filler (D) in the process for obtaining the dispersion, is at least partly formed by at least one aqueous colloidal silica suspension, then this(these) aqueous filler (D) suspension(s) is(are) introduced into the kneading enclosure before obtaining the emulsion;

and **in that** the emulsifier (F) is selected from non-ionic surfactants.

2. The dispersion according to claim 1, **characterized in that** it has a residual emulsion level T (%) measured according to a procedure P such that

| | |
|---|---|
| | $T \geq 70$ |
| preferably | $T \geq 80$ |
| and still more preferentially | $T \geq 85$. |

3. The dispersion according to claim 1 or 2, **characterized in that** this(these) aqueous filler (D) suspension(s) is(are) totally or partly introduced into the kneading enclosure before obtaining the emulsion; wherein the fraction of filler (D) suspension(s) which may be introduced before obtaining the emulsion, is comprised between 3 and 100% by dry weight of the total filler (D) amount taken in the dry condition.

4. The dispersion according to any of claims 1 or 3, **characterized in that** the totality of the water required for making the emulsion comes from the aqueous suspension(s) providing the filler (D).

5. The dispersion according to any of claims 1 to 4, **characterized in that** it comprises a filler (D') which is provided in the process for obtaining the dispersion, in powdery form and which has a specific surface area Ss ($m^2/g$) such that:

| | |
|---|---|
| | $Ss \leq 5$ |
| preferably | $Ss \leq 3$. |

6. The aqueous dispersion according to any of claims 1 to 5, **characterized in that** the oils (A) are $\alpha,\omega$-hydroxylated oils or functional oils including per molecule at least 2 optionally condensable functional groups after hydrolysis.

7. The aqueous dispersion according to any claims 1 to 6, **characterized in that** the oils (A) have the generic formula (I).

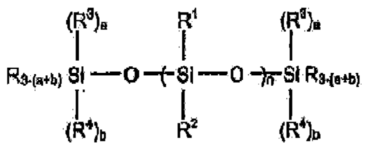

formula wherein

- a is 0 or 1
- b is 0 or 1
- with a+b = 0; 1 or 2
- n has a sufficient value for imparting to the polymer of formula (a) the desired viscosity
- the radicals R are identical or different and represent
    - a OH group with a+b = 2;
    - a alkoxy or alkenyloxy group containing from 1 to 10 carbon atoms;
    - a aryloxy group containing from 6 to 13 carbon atoms;
    - a acyloxy group containing from 1 to 13 carbon atoms:
    - a ketiminoxy group containing from 1 to 8 carbon atoms;

• a amino- or amido-functional group containing from 1 to 6 carbon atoms, bound to silicon through a Si-N bond;

- the radicals $R^1$ and $R^2$ are identical or different and represent organic aliphatic alkyl, alkenyl groups having 1 to 10 carbon atoms, aromatic phenyl groups, said groups being optionally substituted with halogen atoms or cyano groups;
- the radicals $R^3$ and $R^4$ are identical or different and represent organic aliphatic alkyl, aminoalkyl, polyaminoalkyl, epoxyalkyl, alkenyl groups containing from 1 to 13 carbon atoms, aromatic aryl groups containing from 6 to 13 carbon atoms;
- at least 2 functional groups optionally condensable after hydrolysis, being present per molecule.

**8.** The aqueous dispersion according to claim 7, **characterized in that** at least 80% of the radicals $R^1$ to $R^4$ represent a methyl group.

**9.** The aqueous dispersion according to any claims 1 to 8, **characterized in that** the adherence promoter, preferably silane (C), has the formula:

$$(R^5)_cSi(R)_{4-c}$$

formula wherein:

- c is 0; 1 or 2
- the radicals $R^5$ are identical or different, correspond to the radicals $R^3$ and $R^4$ of the oil (A) of formula (I)
- the radical R corresponds to the organic radical R of the polyorganosiloxane oil (A) of formula (I)
- said silane being present in amounts of the order of 0 to 10 parts by weight for 100 parts of oil(s) (A)

**10.** The aqueous dispersion according to any claims 1 to 9, **characterized in that** the adherence promoter, preferably the silane (C) is an adherence-modulating additive such as aminopropyltriethoxysilane, aminopropylmethyldiethoxysilane, glycidoxypropyltrimethoxysilane, present in amounts which may range up to 50% of the weight of oil(s) (A).

**11.** The aqueous dispersion according to any claims 1 to 10, **characterized in that** the catalytic curing compound (E) is a derivative of tin, applied in amounts which may range from 0.05 to 1 part by weight for 100 parts of oil (A).

**12.** The aqueous dispersion according to any claims 1 to 11, **characterized in that** the silicone phase (φs) consists in:

- (φs1) an oil (A) with a viscosity at least equal to 10 Pa.s,
- (φs2) a mixture of oils (A), a mixture with a viscosity of at least 10 Pa.s,
- φs3) a mixture of at least one oil (A) and of at least one Crosslinking agent (B) if the latter is required and/or a silane (C), a mixture of viscosity of at least 10 Pa.s,
- or (φs4) a mixture of at least one oil (A) and of the catalytic compound (E), optionally in the presence of at least one silane (C).

**13.** The aqueous dispersion according to claim 12, **characterized in that** the silicone phase (φs) consists in :

- (φs1) an oil (A) with a viscosity of the order of 50 to 1,000 Pa.s,
- (φs2) a mixture of oils (A), a mixture with a viscosity of the order of 50 to 1,000 Pa.s,
- (φs3) a mixture of at least one oil (A) and of at least one crosslinking agent (B) if the latter is required and/or a silane (C), a mixture of viscosity of the order of 50 to 1,000 Pa.s,
- or (φs4) a mixture of at least one oil (A) and of the catalytic compound (E), optionally in the presence of at least one silane (C).

**14.** The aqueous dispersion according to any claims 1 to 13, **characterized in that** it further contains functional additives (G), plasticizers and/or thickeners and/or filler dispersants, the latter being preferably selected from the group of products with anionic hydrophilic function(s) and still more preferentially from the group comprising polyacrylates and/or (poly)phosphates.

**15.** A method for preparing an aqueous dispersion of silicone oil comprising:

- A- 100 parts by weight of oil(s) (A) of at least one organopolysiloxane oil (A) which may crosslink by condensation, if necessary, in the presence of a crosslinking agent (B), into an elastomer;
- B- if necessary from 0.1 to 100 parts by weight of at least one crosslinking agent (B);
- C- optionally, up to 50 parts by weight of at least one adhesion promoter (C) - preferably a silane -;
- D- up to 200 parts by dry weight of a siliceous mineral filler (D);
- E- a catalytically efficient amount of a catalytic curing compound (E) which may range up to 3 parts by weight;
- F- at least one emulsifier (F);
- G- at least one functional additive (G);
- H- and water;

this method including the following essential steps:

I - making an emulsion by kneading a mixture consisting of:

- 100 parts by weight of a silicone phase (φs) with a dynamic viscosity at 25°C at least equal to 10 Pa.s, the silicone phase comprising the already polymerized oil or mixture of already polymerized oils (A) and optionally at least one of the constituents (B), (C) or (E);
- 0.5-20 parts by weight of at least one emulsifier (F), the HLB of said emulsifier or of the mixture of emulsifiers being at least 10;
- 2-20 parts by weight of water;

the (water/water + surfactant(s)) weight ratio being such that the viscosity of the water/water + surfactants mixture is close to or greater than half of that of the silicone phase (φs);
for a duration and under sufficient shearing conditions for obtaining an oil-in-water emulsion with a grain size of the order of 0.1 to 5 micrometers.
II - optionally diluting with water until a 25%-97% dry extract is obtained;
III - and then adding the constituent(s) not present in the silicone phase (φs);

this method being **characterized in that** at least one sub-step is provided for incorporating a filler (D) as aqueous suspension(s) of at least one hydrophilic compound,
with conditions according to which

- in the case when this filler (D) is at least partially formed by at least one aqueous colloidal silica suspension, then this(these) aqueous filler (D) suspension(s) is(are) totally introduced into the kneading enclosure before obtaining the emulsion;
- in the case when this filler (D) is at least partially formed by at least one aqueous suspension of organic (co) polymer(s), then at least one portion of this(these) aqueous filler (D) suspension(s) is(are) introduced into the kneading enclosure before obtaining the emulsion.

**16.** The method according to claim 15, **characterized in that** it has the characteristics as defined in at least one of claims 1 to 15.

**17.** The method according to claim 15 or claim 16, **characterized in that** the sub-step(s) for incorporating the aqueous filler (D) suspension(s) occur(s):

- during step I in a fraction comprised between 2 and 100%, preferably between 3 and 100% by dry weight of the total amount of filler (D), in the dry condition;
- and during step II and/or III, preferably III.

**18.** The method according to any of claims 15 to 17, **characterized in that** all or part of the water of the dispersion is provided by the aqueous filler (D) suspension(s).

**19.** The method according to any of claims 15 to 18, **characterized in that** obtaining the oil-in-water emulsion of the silicone phase (φs) is achieved:

- by introducing the silicone oil (A) in a mixture of water and/or aqueous filler (D) suspension(s) + emulsifier(s) (F);
- or by introducing the water and/or aqueous filler (D) suspension(s) into a mixture of silicone phase (φs) + emulsifier(s) (F) and kneading at a temperature of the order of 10 to 50°C.

**20.** The method according to any of claims 15 to 19, **characterized in that** the kneading of step III is performed in the kneader which has been used for making the emulsion (step I).

**21.** The method according to any of claims 15 to 20, **characterized in that** the kneading operation is performed in a single or multiple screw extruder, a planetary kneader, a hook kneader, a slow disperser, a static kneader, a blade, propeller, arm, anchor kneader.

**22.** The method according to any of claims 15 to 20, **characterized in that** it comprises at least one sub-step for incorporating a filler (D') in powdery form and which has a specific surface area Ss ($m^2/g$) such that

$$Ss \leq 5$$

preferably $Ss \leq 3$.

**23.** The use of aqueous dispersions according of any of claim 1 to 14 for making elastomeric paints, waterproofing agents for frontages, seal gaskets, flame-retardant elastomeric products, coatings for polymer foam (preferably polyurethane roofing), or sealants

**24.** A concentrated sealant resulting from the use according to claim 23, **characterized in that** it has a dry extract greater than or equal to 80% by weight, preferably greater than or equal to 85% by weight

**Patentansprüche**

**1.** Wässrige Dispersion eines oder mehrerer Silikonöle, die Folgendes umfasst:

-A- 100 Gewichtsteile mindestens eines Polyorganosiloxanöls (A), das durch Kondensation zu einem Elastomer vernetzen kann, falls erforderlich in Gegenwart eines Vernetzungsmittels (B);
-B- falls erforderlich 0,1 bis 100 Gewichtsteile mindestens eines Vernetzungsmittels (B);
-C- gegebenenfalls bis zu 50 Gewichtsteile eines Haftvermittlers (C) - vorzugsweise eines Silans -;
-D- bis zu 200 Gewichtsteile (Trockengewicht) eines Füllstoffs (D), der aus der Gruppe von hydrophilen Verbindungen ausgewählt ist, die kolloidales Siliciumdioxid, Fällungskieselsäure, pyrogene Kieselsäure, $CaCO_3$, $TiO_2$, $Al_2O_3/H_2O$, ein oder mehrere organische (Co)polymere in Emulsion und deren Gemische umfassen;
-E- eine katalytisch wirksame Menge einer katalytischen Verbindung zur Vernetzung (E), die bis zu 3 Gewichtsteile ausmachen kann;
-F- mindestens einen Emulgator (F);
-G- gegebenenfalls mindestens ein funktionelles Additiv (G)
-H- und Wasser;

wobei die Dispersion folgendermaßen erhalten werden kann:

- durch Herstellung einer Emulsion durch Rühren eines Gemischs, bestehend aus:

  - 100 Gewichtsteilen einer Silikonphase (φs) mit einer dynamischen Viskosität bei 25 °C von mindestens gleich 10 Pas, vorzugsweise 50 Pas und noch mehr bevorzugt 70 Pas, wobei φs bereits polymerisiertes Öl oder ein Gemisch von bereits polymerisierten Ölen (A) und gegebenenfalls mindestens eines der Bestandteile (B), (C) oder (E) umfasst;
  - 0,5 bis 20 Gewichtsteilen mindestens eines Emulgators (F), wobei der HLB-Wert des Emulgators oder des Gemischs von Emulgatoren mindestens 10 beträgt;
  - 0 bis 100 Gewichtsteilen, wobei 0 ausgeschlossen ist, des Füllstoffs (D);
  - 2 bis 20 Gewichtsteilen Wasser;

wobei das Gewichtsverhältnis von Wasser zu Wasser + einem oder mehreren Tensiden derart ist, dass die Viskosität des Gemischs von Wasser + einem oder mehreren Tensiden nahe der oder höher als die Hälfte der Viskosität der Silikonphase (φs) ist;
während eines Zeitraums und unter Scherbedingungen, die dazu ausreichen, eine "Öl-in-Wasse"-Emulsion mit einer Korngröße in der Größenordnung von 0,1 bis 5 Mikrometer zu erhalten;

- durch eventuelle Verdünnung mit Wasser, bis ein Trockenextrakt von 25 bis 97 % erhalten wird;
- dann durch Zugabe von

  - des einen oder der mehreren Bestandteile, die nicht in der Silikonphase (φs) vorliegen,
  - und/oder 0 bis 100 Gewichtsteilen des Füllstoffs (D);

**dadurch gekennzeichnet,**
**dass** im Vorgang des Erhaltens der Dispersion zwischen 2 und 100 Gew.-% (Trockengewicht) der Gesamtmenge des Füllstoffs (D) in der Form von einer oder mehreren wässriger Suspensionen mindestens einer hydrophilen Verbindung in das Rührgefäß vor Erhalten der Emulsion zugeführt werden und unter Bedingungen, gemäß denen:

  - in dem Fall, in dem der Füllstoff (D), der im Vorgang des Erhaltens der Dispersion zugeführt wird, mindestens ein Teil ist, der von mindestens einer wässrigen Suspension von kolloidalem Siliciumdioxid gebildet wird, diese eine wässrige Suspension (oder diese mehreren wässrigen Suspensionen) des Füllstoffs (D) vor Erhalten der Emulsion in das Rührgefäß eingebracht wird (werden); und

**dass** der Emulgator (F) aus nichtionischen Tensiden ausgewählt ist.

**2.** Dispersion nach Anspruch 1, **dadurch gekennzeichnet, dass** sie einen Restemulsionsgehalt T (%), der gemäß einem Protokoll **P** gemessen wird, wie folgt aufweist:

| | |
|---|---|
| | $T \geq 70$ |
| vorzugsweise | $T \geq 80$ |
| und noch mehr bevorzugt | $T \geq 85.$ |

**3.** Dispersion nach Anspruch 1 oder 2, **dadurch gekennzeichnet, dass** diese eine wässrige Suspension (oder diese mehreren wässrigen Suspensionen) des Füllstoffs (D) vollständig oder teilweise vor Erhalten der Emulsion in das Rührgefäß eingebracht wird (werden); wobei die Fraktion der Suspension bzw. Suspensionen des Füllstoffs (D), die vor Erhalt der Emulsion eingebracht werden kann, zwischen 3 und 100 Gew.-% (Trockengewicht) der Gesamtmenge des Füllstoffs (D) im Trockenzustand liegt.

**4.** Dispersion nach einem der Ansprüche 1 oder 3, **dadurch gekennzeichnet, dass** das gesamte Wasser, das zur Herstellung der Emulsion erforderlich ist, von der einen wässrigen Suspension (oder den mehreren wässrigen Suspensionen) stammt, die den Füllstoff (D) zuführt (zuführen).

**5.** Dispersion nach einem der Ansprüche 1 bis 4, **dadurch gekennzeichnet, dass** sie einen Füllstoff (D'), der im Vorgang des Erhaltens der Dispersion zugeführt wird, in Pulverform umfasst, der eine spezifische Oberfläche SO (in $m^2/g$) wie folgt aufweist:

| | |
|---|---|
| | $SO \leq 5$ |
| Vorzugsweise | $SO \leq 3.$ |

**6.** Wässrige Dispersion nach einem der Ansprüche 1 bis 5, **dadurch gekennzeichnet, dass** die Öle (A) $\alpha,\omega$-hydroxylierte Öle oder funktionelle Öle sind, die mindestens 2 funktionelle Gruppen pro Molekül umfassen, die gegebenenfalls nach Hydrolyse kondensiert werden können.

**7.** Wässrige Dispersion nach einem der Ansprüche 1 bis 6, **dadurch gekennzeichnet, dass** die Öle (A) die allgemeine Formel (I) aufweisen:

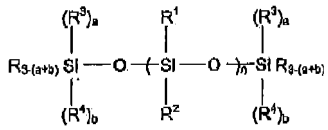
,

wobei in der Formel:

- a 0 oder 1 ist
- b 0 oder 1 ist
- mit a+b = 0; 1 oder2 2
- n einen Wert aufweist, der ausreicht, um dem Polymer der Formel (a) die gewünschte Viskosität zu verleihen
- die Reste R gleich oder verschieden sind und für Folgendes stehen:

  ■ eine OH-Gruppe mit a + b = 2;
  ■ eine Alkoxy- oder Alkenyloxygruppe, die 1 bis 10 Kohlenstoffatome enthält;
  ■ eine Aryloxygruppe, die 6 bis 13 Kohlenstoffatome enthält;
  ■ eine Acyloxygruppe, die 1 bis 13 Kohlenstoffatome enthält;
  ■ eine Ketiminoxygruppe, die 1 bis 8 Kohlenstoffatome enthält;
  ■ eine amino- oder amidofunktionelle Gruppe, die 1 bis 6 Kohlenstoffatome enthält, die für eine Si-N-Bindung mit Silicium verbunden sind;

- die Reste $R^1$ und $R^2$ gleich oder verschieden sind und für organische aliphatische Alkyl- oder Alkenylgruppen mit 1 bis 10 Kohlenstoffatomen oder aromatische Phenylgruppen stehen, wobei diese Gruppen gegebenenfalls durch Halogenatome oder Cyanogruppen substituiert sind
- die Reste $R^3$ und $R^4$ gleich oder verschieden sind und für organische aliphatische Alkyl-, Aminoalkyl-, Polyaminoalkyl-, Epoxyalkyl- oder Alkenylgruppen, die 1 bis 13 Kohlenstoffatome enthalten, oder aromatische Arylgruppen, die 6 bis 13 Kohlenstoffatome enthalten, stehen; wobei mindestens 2 funktionelle Gruppen, die gegebenenfalls nach Hydrolyse kondensiert werden können, pro Molekül vorliegen.

8. Dispersion nach Anspruch 7, **dadurch gekennzeichnet, dass** mindestens 80 % der Reste $R^1$ bis $R^4$ für eine Methylgruppe stehen.

9. Wässrige Dispersion nach einem der Ansprüche 1 bis 8, **dadurch gekennzeichnet, dass** der Haftvermittler, vorzugsweise das Silan (C) die folgende Formel aufweist:

$$(R^5)_cSi(R)_{4-c},$$

wobei in der Formel:

- c 0; 1 oder 2 ist
- die Reste $R^5$, die gleich oder verschieden sind, den Resten $R^3$ und $R^4$ des Öls (A) der Formel (I) entsprechen
- der Rest R dem organischen Rest R des Polyorganosiloxanöls (A) der Formel (I) entspricht
- das Silan in Mengen in der Größenordnung von 0 bis 10 Gewichtsteilen pro 100 Gewichtsteile des einen oder der mehreren Öle (A) vorliegt.

10. Wässrige Dispersion nach einem der Ansprüche 1 bis 9, **dadurch gekennzeichnet, dass** der Haftvermittler, vorzugsweise das Silan (C) ein Additiv zur Regulierung der Haftung ist, wie Aminopropyltriethoxysilan, Aminopropylmethyldiethoxysilan und Glycidoxypropyltrimethoxysilan, das in Mengen vorliegt, die bis zu 50 Gew.-% des einen oder der mehreren Öle (A) ausmachen können.

11. Wässrige Dispersion nach einem der Ansprüche 1 bis 10, **dadurch gekennzeichnet, dass** die katalytischen Verbindung zur Vernetzung (E) ein Zinnderivat ist, das gemäß Mengen eingesetzt wird, die 0,05 bis 1 Gewichtsteil pro 100 Teile des Öls (A) ausmachen können.

12. Wässrige Dispersion nach einem der Ansprüche 1 bis 11, **dadurch gekennzeichnet, dass** die Silikonphase (φs) aus Folgendem besteht:

- (φs1) einem Öl (A) mit einer Viskosität von mindestens gleich 10 Pas,
- (φs2) einem Gemisch von Ölen (A), wobei das Gemisch eine Viskosität von mindestens gleich 10 Pas aufweist,
- (φs3) einem Gemisch mindestens eines Öls (A) und erforderlichenfalls mindestens eines Vernetzers (B) und/ oder eines Silans (C), wobei das Gemisch eine Viskosität von mindestens 10 Pas aufweist,
- oder (φs4) einem Gemisch mindestens eines Öls (A) und der katalytischen Verbindung (E), gegebenenfalls in Gegenwart mindestens eines Silans (C).

**13.** Wässrige Dispersion nach Anspruch 12, **dadurch gekennzeichnet, dass** die Silikonphase (φs) aus Folgendem besteht:

- (φs1) einem Öl (A) mit einer Viskosität in der Größenordnung von 50 bis 1000 Pas,
- (φs2) einem Gemisch von Ölen (A), wobei das Gemisch eine Viskosität in der Größenordnung von 50 bis 1000 Pas aufweist,
- (φs3) einem Gemisch mindestens eines Öls (A) und erforderlichenfalls mindestens eines Vernetzers (B) und/ oder eines Silans (C), wobei das Gemisch eine Viskosität in der Größenordnung von 50 bis 1000 Pas aufweist,
- oder (φs4) einem Gemisch mindestens eines Öls (A) und der katalytischen Verbindung (E), gegebenenfalls in Gegenwart mindestens eines Silans (C).

**14.** Wässrige Dispersion nach einem der Ansprüche 1 bis 13, **dadurch gekennzeichnet, dass** sie außerdem funktionelle Additive (G), Weichmacher und/oder Verdickungsmittel und/oder Mittel zum Dispergieren von Füllstoffen enthält, wobei diese letzteren vorzugsweise aus der Gruppe von Produkten mit einer oder mehreren anionischen hydrophilen Funktionen und noch mehr bevorzugte aus der Gruppe, die Polyacrylate und/oder (Poly)phosphate umfasst, ausgewählt sind.

**15.** Verfahren zur Herstellung einer wässrigen Dispersion von Silikonöl, die Folgendes umfasst:

- A- 100 Gewichtsteile eines oder mehrerer Öle (A) von mindestens einem Organopolysiloxanöl (A), das durch Kondensation zu einem Elastomer vernetzen kann, falls erforderlich in Gegenwart eines Vernetzungsmittels (B);
- B- falls erforderlich 0,1 bis 100 Gewichtsteile mindestens eines Vernetzungsmittels (B);
- C- gegebenenfalls bis zu 50 Gewichtsteile eines Haftvermittlers (C) - vorzugsweise eines Silans -;
- D- bis zu 200 Gewichtsteile (Trockengewicht) eines anorganischen kieselsäurehaltigen Füllstoffs (D);
- E- eine katalytisch wirksame Menge einer katalytischen Verbindung zur Vernetzung (E), die bis zu 3 Gewichtsteile ausmachen kann;
- F- mindestens einen Emulgator (F);
- G- mindestens ein funktionelles Additiv (G)
- H- und Wasser;

wobei das Verfahren die folgenden wesentlichen Schritte umfasst:

I - Herstellen einer Emulsion durch Rühren eines Gemischs, das aus Folgendem besteht:

- 100 Gewichtsteilen einer Silikonphase (φs) mit einer dynamischen Viskosität bei 25 °C von mindestens gleich 10 Pas, wobei die Silikonphase bereits polymerisiertes Öl oder ein Gemisch von bereits polymerisierten Ölen (A) und gegebenenfalls mindestens einen der Bestandteile (B), (C) oder (E) umfasst;
- 0,5 bis 20 Gewichtsteilen mindestens eines Emulgators (F), wobei der HLB-Wert des Emulgators oder des Gemischs von Emulgators mindestens 10 beträgt;
- 2 bis 20 Gewichtsteilen Wasser;

wobei das Gewichtsverhältnis von Wasser zu Wasser + einem oder mehreren Tensiden derart ist, dass die Viskosität des Gemischs von Wasser + einem oder mehreren Tensiden nahe der oder höher als die Hälfte der Viskosität der Silikonphase (φs) ist;
während eines Zeitraums und unter Scherbedingungen, die dazu ausreichen, eine "Ol-in-Wasser"-Emulsion mit einer Korngröße in der Größenordnung von 0,1 bis 5 Mikrometer zu erhalten;
II - eventuelles Verdünnen mit Wasser, bis ein Trockenextrakt von 25 bis 97 % erhalten wird;
III - dann Zugeben des einen oder der mehreren Bestandteile, die nicht in der Silikonphase (φs) vorliegen,

wobei das Verfahren **dadurch gekennzeichnet ist, dass** mindestens ein Teilschritt des Einarbeitens eines Füllstoffs (D) in der Form von einer oder mehreren wässrigen Suspensionen mindestens einer hydrophilen Verbindung vorgesehen wird,
unter Bedingungen, gemäß denen:

- in dem Fall, in dem dieser Füllstoff (D) mindestens ein Teil ist, der von mindestens einer wässrigen Suspension von kolloidalem Siliciumdioxid gebildet wird, diese eine wässrige Suspension (oder diese mehreren wässrigen Suspensionen) des Füllstoffs (D) vor Erhalten der Emulsion vollständig in das Rührgefäß eingebracht wird (werden);
- in dem Fall, in dem dieser Füllstoff (D) mindestens ein Teil ist, der von einer wässrigen Suspension eines oder mehrerer organischer (Co)polymere gebildet wird, mindestens ein Teil dieser einen wässrigen Suspension (oder dieser mehreren wässrigen Suspensionen) des Füllstoffs (D) vor Erhalten der Emulsion in das Rührgefäß eingebracht wird.

**16.** Verfahren nach Anspruch 15, **dadurch gekennzeichnet, dass** es die wie in mindestens einem der Ansprüche 1 bis 15 definierten Charakteristika aufweist.

**17.** Verfahren nach Anspruch 15 oder 16, **dadurch gekennzeichnet, dass** der eine oder die mehreren Teilschritte des Einarbeitens der einen wässrigen Suspension (oder der mehreren wässrigen Suspensionen) des Füllstoffs (D):

- im Verlauf des Schritts I in einer Fraktion, die zwischen 2 und 100 - vorzugsweise zwischen 3 und 100 - Gew.-% (Trockengewicht) der Gesamtmenge des Füllstoffs (D) im Trockenzustand liegt;
- und im Verlauf des Schritts II und/oder III, vorzugsweise III erfolgt.

**18.** Verfahren nach einem der Ansprüche 15 bis 17, **dadurch gekennzeichnet, dass** das gesamte oder ein Teil des Wassers der Dispersion der einen wässrigen Suspension (oder den mehreren wässrigen Suspensionen) des Füllstoffs (D) zugeführt wird.

**19.** Verfahren nach einem der Ansprüche 15 bis 18, **dadurch gekennzeichnet, dass** das Erhalten der "Öl-in-Wasser"-Emulsion der Silikonphase (φs) folgendermaßen durchgeführt wird:

- durch Einbringen des Silikonöls (A) in ein Gemisch von Wasser und/oder einer oder mehreren wässrigen Suspensionen des Füllstoffs (D) + einem oder mehreren Emulgatoren (F);
- oder durch Einbringen des Wassers und/oder der einen oder den mehreren wässrigen Suspensionen des Füllstoffs (D) in ein Gemisch von Silikonphase (φs) + einem oder mehreren Emulgatoren (F) und Rühren bei einer Temperatur in der Größenordnung von 10 bis 50 °C.

**20.** Verfahren nach einem der Ansprüche 15 bis 19, **dadurch gekennzeichnet, dass** das Rühren des Schritts III in einem Rührer vorgenommen wird, der zum Herstellen der Emulsion (Schritt I) diente.

**21.** Verfahren nach einem der Ansprüche 15 bis 20, **dadurch gekennzeichnet, dass** das Vornehmen des Rührens in einem Einschnecken- oder Mehrschnecken-Extrudern, einem Planetenmischer, einem Knethaken, einem langsam laufenden Dispergierer, einem statischen Mischer, einem Schaufelmischer, einem Propellermischer, einem Kneter oder einem Ankermischer durchgeführt wird.

**22.** Verfahren nach einem der Ansprüche 15 bis 20, **dadurch gekennzeichnet, dass** es mindestens einen Teilschritt des Einbringens eines Füllstoffs (D') in Pulverform umfasst, der eine spezifische Oberfläche SO (in $m^2/g$) wie folgt aufweist.

$$SO \leq 5$$

vorzugsweise $SO \leq 3$

**23.** Verwendung von wassrigen Dispersionen nach einem der Ansprüche 1 bis 14 zur Herstellung von elastomeren Farben, Mitteln zum Wasserdichtmachen von Fassaden, Dichtungsfugen, elastomeren flammhemmenden Produkten, Beschichtungen für Polymerschaum (vorzugsweise Polyurethan; "Bedachungen") oder Spachtelmassen.

**24.** Spachtelmassenkonzentrat, das aus der Verwendung nach Anspruch 23 resultiert, **dadurch gekennzeichnet, dass** sie einen Trockenextrakt größer oder gleich 80 Gew.-%, vorzugsweise größer oder gleich 85 Gew.-% aufweist

## RÉFÉRENCES CITÉES DANS LA DESCRIPTION

*Cette liste de références citées par le demandeur vise uniquement à aider le lecteur et ne fait pas partie du document de brevet européen. Même si le plus grand soin a été accordé à sa conception, des erreurs ou des omissions ne peuvent être exclues et l'OEB décline toute responsabilité à cet égard.*

### Documents brevets cités dans la description

- US 4221688 A
- EP 0354015 A
- EP 0665861 A
- EP 0665862 A
- EP A A
- EP 266729 A
- US 3355406 A
- US 3433780 A
- US 4554187 A
- FR 2638166 A
- US 3294725 A
- US 4584341 A
- US 4618642 A
- US 4608412 A
- US 4525565 A
- EP 387157 A
- EP 340120 A
- EP 364375 A
- FR 1248826 A
- FR 1023477
- US 3862919 A
- BE 842305 A
- EP 147323 A
- EP 235049 A
- GB 1289900 A